# EUROPÄISCHE PATENTSCHRIFT

(11) **EP 3 452 536 B1**
(45) Veröffentlichungstag und Bekanntmachung des Hinweises auf die Patenterteilung: **17.01.2024**
(21) Anmeldenummer: 17719579.9
(22) Anmeldetag: 25.04.2017
(51) Int. Cl.: C08J 9/00

(54) **SELBSTKÜHLENDE SCHAUMSTOFFHALTIGE KOMPOSITMATERIALIEN**
SELF-COOLING FOAM-CONTAINING COMPOSITE MATERIALS
MATÉRIAUX COMPOSITES AUTO-REFROIDISSANT CONTENANT DE LA MOUSSE

(30) Priorität: 04.05.2016 EP 16168437
(43) Veröffentlichungstag der Anmeldung: 13.03.2019
(73) Patentinhaber: BASF SE, 67056 Ludwigshafen (DE)
(72) Erfinder: BRUCHMANN, Bernd, 67251 Freinsheim (DE); SCHUETTE, Markus, 49324 Melle (DE); KASPER, Patrick, 79350 Sexau (DE); MUELHAUPT, Rolf, 79117 Freiburg (DE)
(74) Vertreter: BASF IP Association
(86) Internationale Anmeldenummer: PCT/EP2017/059810
(87) Internationale Veröffentlichungsnummer: WO 2017/190989

(56) Entgegenhaltungen:
- WO-A1-00/54866
- WO-A1-2010/046084
- WO-A2-2011/138030
- DE-A1-102006 023 585
- US-A- 3 306 966
- US-A1- 2003 010 486

## Beschreibung

Die vorliegende Erfindung betrifft ein Kompositmaterial, das mindestens ein thermoresponsives Polymer und mindestens einen organischen Schaumstoff enthält. Des Weiteren betrifft die vorliegende Erfindung ein Verfahren zur Herstellung des Kompositmaterials sowie die Verwendung des Kompositmaterials zur Kühlung und zur Temperaturregelung.

Insbesondere in Regionen mit hohen Tagestemperaturen und hoher Sonneneinstrahlung besteht Bedarf, Häuser zu kühlen, so dass für Menschen eine angenehme Umgebung geschaffen werden kann. Die konventionelle Kühlung mittels Klimaanlagen führt häufig zu hohem Energieverbrauch. Da insbesondere in heutiger Zeit das Einsparen von Energie ein wichtiges Ziel ist, besteht daher Bedarf an weniger energieverbrauchenden Kühlmethoden. Im Stand der Technik sind hierzu verschiedene Verfahren beschrieben.

N. M. Nahar et al., Building and Environment 2003, 38, 109-116 und E. H. Amer, Energy 2006, 31, 1332-1344, beschreiben verschiedene Verfahren, um Häuser in Regionen mit hoher Sonneneinstrahlung und damit auch hohen Temperaturen zu kühlen. Dabei werden einerseits die Dächer der Testhäuser mit reflektierenden Materialien wie weißem Zement oder weißen Fliesen versehen, andererseits werden thermische Isolationsmaterialien wie Vermiculit auf oder unter dem Dach eingesetzt. Darüber hinaus erfolgt die Kühlung durch Verdampfung von Wasser, beispielsweise aus Jutesäcken, die über das Dach gelegt werden oder aus Wasserbassins, die sich auf dem Dach befinden. Am effizientesten erfolgt die Kühlung durch das Verdampfen von Wasser. Allerdings sind in den in N. M. Nahar et al., Building and Environment 2003, 38, 109-111 und E. H. Amer, Energy 2006, 31, 1332-1344 beschriebenen Verfahren zur Kühlung durch Verdampfung von Wasser relativ große Mengen an Wasser notwendig, die zudem ständig nachgeliefert werden müssen.

D. Karamanis, ICONCE 2014, 33-37, beschreibt poröse Materialien, insbesondere Tonminerale, die in ihren Mikroporen Wasser speichern und Wasser aus diesen verdampfen können.

A. C. C. Rotzetter et al., Advanced Materials 2012, 24, 5352-5356*,* beschreibt den Einsatz von Poly(N-isopropylacrylamid)-Hydrogelen zur Kühlung von Gebäuden. Dabei wird das Poly(N-isopropylacrylamid)-Hydrogel als Folie zwischen eine PVC-Folie und eine nanoporöse Polycarbonatmembran eingebracht. Die Kühlwirkung des Poly(N-isopropylacrylamid)-Hydrogels ist relativ gut, allerdings sind durch die Verwendung als Folie relativ große Mengen an Poly(N-isopropylacrylamid) notwendig. Weiterhin ist die Folie mechanisch sehr empfindlich und nicht überall einsetzbar.

Die US 2003/010486 beschreibt einen Tauchanzug zur Regulierung der Hauttemperatur. Dieser umfasst ein Kompositmaterial, das eine Schicht eines offenzelligen Schaumstoffs enthält, wobei in den Schaumstoff 5 bis 80 Gew.-% pulverförmige Hydrogelpartikel eingelagert sind.

Die WO 2011/138030 beschreibt ein Verfahren zur Herstellung eines Kompositmaterials, das eine Polymermatrix und ein thermoresponsives Polymer umfasst. Bei der Herstellung werden die Ausgangsverbindungen für die Polymermatrix sowie das thermoresponsive Polymer miteinander gemischt und anschließend die Polymerisation sowohl der Polymermatrix als auch des thermoresponsiven Polymers initiiert.

Die WO 2010/046084 beschreibt die Herstellung von makroporösen, polymeren, vernetzten Materialien. Dabei wird ein polymerisierbares Monomer mit einzelnen Perlen gemischt, das Monomer polymerisiert, anschließend die Perlen verflüssigt und so aus der entstandenen Polymermatrix entfernt. Dadurch werden Makroporen in der Polymermatrix erhalten. Die Perlen sind beispielsweise aus thermoresponsiven Polymeren.

Die WO 00/54866 beschreibt Filter, bei denen ein Gel auf ein Substrat eines Filters aufgebracht wird, wobei das Gel durch Temperaturschaltung seine Permeabilität ändert. Als Substrat kann unter anderem ein Schaumstoff verwendet werden.

Die DE 10 2006 023585 beschreibt Polymerblends aus Styrolpolymeren und Oxiran-Homopolymeren.

Die US 3306966 beschreibt ein Verfahren zur Herstellung von kompakten, expandierbaren Polyurethan-Schaumstoffen.

Die Kompositmaterialien gemäß der US 2003/010486, der WO 2011/138030, der WO 2010/046084 und der WO 00/54866 sind nur schwer herstellbar, da häufig das thermoresponsive Polymer die Polymerisation der Schaumstoffe beeinflusst. Dadurch weisen sie auch häufig eine geringe Stabilität auf.

Es besteht daher Bedarf an Kompositmaterialien, die dazu geeignet sind, zur Kühlung eingesetzt zu werden. Die Materialien sollen die vorstehend beschriebenen Nachteile der Materialien aus dem Stand der Technik in verringertem Maße oder gar nicht aufweisen.

Gelöst wurde diese Aufgabe durch ein Kompositmaterial, das die Komponenten
(A) mindestens ein thermoresponsives Polymer und
(B) mindestens einen organischen Schaumstoff enthält,
   wobei die Komponente (A) eine untere kritische Lösungstemperatur (LCST) aufweist,
   wobei die untere kritische Lösungstemperatur (LCST) im Bereich von 5 bis 70 °C liegt,
   wobei die Komponente (B) ausgewählt ist aus Polyurethanschaumstoffen, und
   wobei das Kompositmaterial zusätzlich eine Komponente
(C) mindestens ein Tonmineral enthält. Die Komponente (C) ist mindestens ein schichtartig aufgebautes Silikat. Die untere kritische Lösungstemperatur (LCST) ist die Temperatur, bei der die Komponente (A) und Wasser eine Mischungslücke aufweisen. Das Kompositmaterial ist vorgesehen zur Kühlung von Gebäuden, von elektrischen Aggregaten, von Batterien oder Akkumulatoren, von Außenfassaden von Gebäuden und von Innenräumen, und zur Wärmeregulierung bei Sitzmöbeln, in Fahrzeugen, in Schuhen und in Bekleidung.

Es wurde überraschend gefunden, dass die erfindungsgemäßen Kompositmaterialien mehr Wasser aufnehmen können und aufgenommenes Wasser besser freisetzen können als Materialien, wie sie im Stand der Technik beschrieben sind, beispielsweise Materialien, die nur ein thermoresponsives Polymer enthalten oder Kompositmaterialien, die einen Superabsorber und einen organischen Schaumstoff enthalten. Daher sind die erfindungsgemäßen Kompositmaterialien besonders gut geeignet für die Kühlung, beispielsweise von Gebäuden oder elektrischen Aggregaten, Batterien oder Akkumulatoren, durch Verdampfung von Wasser.

Unter Superabsorbern werden im Rahmen der vorliegenden Erfindung Polymere verstanden, die ein Vielfaches ihrer Masse, beispielsweise das 30- bis 800 -fache ihrer Masse, an Wasser aufnehmen können und die im Bereich von 0 bis 100 °C keine untere kritische Lösungstemperatur (LCST) aufweisen, bevorzugt weisen sie überhaupt keine untere kritische Lösungstemperatur (LCST) auf.

Unter Superabsorbern werden im Rahmen der vorliegenden Erfindung insbesondere vernetzte Polyacrylate verstanden, bei denen die Carbonsäuregruppen (-COOH) deprotoniert worden sind und als Carboxylatgruppen (-COO⁻) vorliegen. Als Gegenionen (Kationen) enthalten diese vernetzten Polyacrylate Alkalimetalle, wie beispielsweise Natrium (Na⁺) und/oder Kalium (K⁺).

Vorteilhaft ist zudem, dass Wasser, insbesondere bei Temperaturen oberhalb der unteren kritischen Lösungstemperatur (LCST) des mindestens einen thermoresponsiven Polymers (Komponente (A)) aus den erfindungsgemäßen Kompositmaterialien freigesetzt wird. Unterhalb der unteren kritischen Lösungstemperatur (LCST) der Komponente (A) wird nur wenig oder sogar gar kein Wasser aus den erfindungsgemäßen Kompositmaterialien freigesetzt, so dass die kühlende Wirkung der erfindungsgemäßen Kompositmaterialien insbesondere dann erst einsetzt, wenn höhere Temperaturen vorliegen, wenn also eine Kühlung tatsächlich erwünscht ist. Hat die Komponente (A) ihr Wasser oberhalb der LCST abgegeben, kann sie bei Unterschreitung der LCST wieder Wasser aufnehmen, beispielsweise aus der Umgebungsluft, und kann dann wieder zur Kühlung eingesetzt werden.

Vorteilhaft ist daher, dass die Wasseraufnahme und -abgabe der erfindungsgemäßen Kompositmaterialien reversibel und durch die Temperatur steuerbar ist. Durch die reversible Wasseraufnahme und -abgabe des Kompositmaterials kann seine Kühlwirkung auch über lange Zeiträume erhalten bleiben. Die Wasseraufnahme und -abgabe kann durch die natürlichen Aufheiz- und Abkühlphasen der Umgebung des Kompositmaterials gesteuert werden.

Durch das mindestens eine Tonmineral (Komponente (C)) ist das Kompositmaterial zudem besonders gut herstellbar und dadurch auch besonders stabil.

Nachfolgend wird die vorliegende Erfindung näher erläutert.

### Kompositmaterial

Erfindungsgemäß erhält das Kompositmaterial die Komponenten (A), mindestens ein thermoresponsives Polymer, und (B), mindestens einen organischen Schaumstoff, sowie (C), mindestens ein Tonmineral.

Die Begriffe "Komponente (A)" und "mindestens ein thermoresponsives Polymer" werden im Rahmen der vorliegenden Erfindung synonym gebraucht und besitzen daher die gleiche Bedeutung.

Gleiches gilt für "Komponente (B)" und "mindestens ein organischer Schaumstoff".

Diese Begriffe werden im Rahmen der vorliegenden Erfindung ebenfalls synonym gebraucht und besitzen im Rahmen der vorliegenden Erfindung daher die gleiche Bedeutung.

Das erfindungsgemäße Kompositmaterial enthält beispielsweise im Bereich von 0,5 bis 50 Gew.-% der Komponente (A) und im Bereich von 50 bis 99,5 Gew.-% der Komponente (B), jeweils bezogen auf die Summe der Gew.-% der Komponenten (A) und (B).

Bevorzugt enthält das Kompositmaterial im Bereich von 5 bis 45 Gew.-% der Komponente (A) und im Bereich von 55 bis 95 Gew.-% der Komponente (B), bezogen auf die Summe der Gew.-% der Komponenten (A) und (B).

Besonders bevorzugt enthält das Kompositmaterial im Bereich von 20 bis 40 Gew.-% der Komponente (A) und im Bereich von 60 bis 80 Gew.-% der Komponente (B), jeweils bezogen auf die Summe der Gew-% der Komponenten (A) und (B).

Die Komponente (A) des Kompositmaterials liegt üblicherweise verteilt in der Komponente (B) des Kompositmaterials vor.

Die Komponente (A) des Kompositmaterials kann gleichmäßig (homogen) oder ungleichmäßig verteilt in der Komponente (B) des Kompositmaterials vorliegen. Bevorzugt liegt die Komponente (A) gleichmäßig verteilt in der Komponente (B) vor. Die Komponente (A) liegt dann dispergiert in der Komponente (B) vor.

Die Komponente (A) ist dann die disperse Phase, auch innere Phase genannt, die Komponente (B) das Dispersionsmedium, auch kontinuierliche Phase genannt.

Gegenstand der vorliegenden Erfindung ist daher auch ein Kompositmaterial, das die Komponente (A) verteilt, bevorzugt gleichmäßig verteilt in der Komponente (B), enthält.

Gegenstand der vorliegenden Erfindung ist weiterhin auch ein Kompositmaterial, das die Komponente (A) dispergiert in der Komponente (B) enthält.

Außerdem enthält das erfindungsgemäße Kompositmaterial zusätzlich eine Komponente (C), mindestens ein Tonmineral.

Die Begriffe "Komponente (C)" und "mindestens ein Tonmineral" werden im Rahmen der vorliegenden Erfindung synonym gebraucht und besitzen daher die gleiche Bedeutung.

Beispielsweise enthält das Kompositmaterial im Bereich von 0,5 bis 50 Gew.-% der Komponente (A), im Bereich von 25 bis 99,49 Gew.-% der Komponente (B) und im Bereich von 0,01 bis 50 Gew.-% der Komponente (C), jeweils bezogen auf die Summe der Gew.-% der Komponenten (A), (B) und (C), bevorzugt bezogen auf das Gesamtgewicht des Kompositmaterials.

Bevorzugt enthält das Kompositmaterial im Bereich von 5 bis 45 Gew.-% der Komponente (A), im Bereich von 10 bis 94,9 Gew.-% der Komponente (B) und im Bereich von 0,1 bis 45 Gew.-% der Komponente (C), jeweils bezogen auf die Summe der Gew.-% der Komponenten (A), (B) und (C), bevorzugt bezogen auf das Gesamtgewicht des Kompositmaterials.

Besonders bevorzugt enthält das Kompositmaterial im Bereich von 10 bis 40 Gew.-% der Komponente (A), im Bereich von 20 bis 89,5 Gew.-% der Komponente (B) und im Bereich von 0,5 bis 20 Gew.-% der Komponente (C), jeweils bezogen auf die Summe der Gew.-% der Komponenten (A), (B) und (C), bevorzugt bezogen auf das Gesamtgewicht des Kompositmaterials.

Gegenstand der vorliegenden Erfindung ist daher auch ein erfindungsgemäßes Kompositmaterial, wobei das Kompositmaterial im Bereich von 0,05 bis 50 Gew.-% der Komponente (A), im Bereich von 25 bis 99,49 Gew.-% der Komponente (B) und im Bereich von 0,01 bis 50 Gew.-% der Komponente (C) enthält, jeweils bezogen auf die Summe der Gewichtsprozente der Komponenten (A), (B) und (C).

Beispielsweise kann die Komponente (C), ebenso wie die Komponente (A), verteilt in der Komponente (B) vorliegen.

Bevorzugt liegen die Komponenten (A) und (C) in der Komponente (B) gleichmäßig verteilt vor. Liegen die Komponenten (A) und (C) in der Komponente (B) gleichmäßig verteilt vor, so liegen die Komponenten (A) und (C) in der Komponente (B) dispergiert vor.

Es ist möglich, dass die Komponenten (A) und (C) zwei separate Phasen in der kontinuierlichen Phase der Komponente (B) bilden. Bevorzugt bilden die Komponenten (A) und (C) in der kontinuierlichen Phase der Komponente (B) eine gemeinsame disperse Phase. In dieser Ausführungsform enthält die disperse Phase ein Gemisch der Komponenten (A) und (C).

Wenn die Komponenten (A) und (C) als Gemisch vorliegen, so ist es möglich, dass die Komponente (C) in der Komponente (A) gleichmäßig verteilt, vorliegt. Ebenso ist es möglich und erfindungsgemäß bevorzugt, dass die Komponente (C) an der Oberfläche der Komponente (A) angeordnet ist und/oder die Komponente (A) an der Oberfläche der Komponente (C) angeordnet ist.

Es ist darüber hinaus bevorzugt, dass das Kompositmaterial zusätzlich Wasser enthält. Gegenstand der vorliegenden Erfindung ist somit auch ein erfindungsgemäßes Kompositmaterial, das zusätzlich Wasser enthält.

Beispielsweise liegt das Gewichtsverhältnis von enthaltenem Wasser zu dem Kompositmaterial dann im Bereich von 5 zu 100 bis 300 zu 100, bevorzugt im Bereich von 10 zu 100 bis 200 zu 100 und insbesondere bevorzugt im Bereich von 20 zu 100 bis 100 zu 100.

Enthält das erfindungsgemäße Kompositmaterial Wasser, so ist es bevorzugt, dass das Wasser bei Temperaturen unterhalb der unteren kritischen Lösungstemperatur (LCST) der Komponente (A) in der Komponente (A) verteilt vorliegt. Bei Temperaturen oberhalb der unteren kritischen Lösungstemperatur (LCST) der Komponente (A) liegt das Wasser bevorzugt in der Komponente (B) verteilt vor und wird verdampft und dabei an die Umgebung abgegeben.

Darüber hinaus kann das Kompositmaterial noch weitere Komponenten enthalten.

Derartige weitere Komponenten sind dem Fachmann als solche bekannt und beispielsweise Stabilisatoren, grenzflächenaktive Substanzen, Flammschutzmittel oder Farbstoffe.

Ebenso kann das Kompositmaterial noch weitere Komponenten enthalten, die zur Herstellung der Komponente (A) eingesetzt worden sind, wie beispielsweise Comonomere, Vernetzer, Stabilisatoren und Initiatoren. Weitere Komponenten, die zur Herstellung der Komponente (A) eingesetzt worden sind, sind im Kompositmaterial üblicherweise in der Komponente (A) enthalten.

Beispielsweise enthält das Kompositmaterial im Bereich von 0 bis 50 Gew.-% der weiteren Komponenten, bevorzugt im Bereich von 0,5 bis 20 Gew.-% und insbesondere bevorzugt im Bereich von 1 bis 10 Gew.-%, jeweils bezogen auf das Gesamtgewicht des Kompositmaterials.

Die Gew.-% der im Kompositmaterial enthaltenen Komponenten (A) bis (C) und der weiteren Komponenten addieren sich üblicherweise zu 100 Gew.- %.

### Komponente (A)

Erfindungsgemäß ist die Komponente (A) mindestens ein thermoresponsives Polymer. "mindestens ein thermoresponsives Polymer" bedeutet im Rahmen der vorliegenden Erfindung sowohl genau ein thermoresponsives Polymer, als auch eine Mischung aus zwei oder mehreren thermoresponsiven Polymeren.

Unter einem thermoresponsiven Polymer wird im Rahmen der vorliegenden Erfindung ein Polymer verstanden, das bei einer unteren kritischen Lösungstemperatur (LCST) sprunghaft seine Wasserlöslichkeit ändert. Bei Temperaturen unterhalb der unteren kritischen Lösungstemperatur (LCST) weist das Polymer eine gute Wasserlöslichkeit auf, vorzugsweise ist das thermoresponsive Polymer vollständig mit Wasser mischbar, während es bei Temperaturen größer oder gleich der unteren kritischen Lösungstemperatur (LCST) eine schlechte Wasserlöslichkeit aufweist.

Es ist möglich, dass ein thermoresponsives Polymer außerdem eine obere kritische Lösungstemperatur (UCST) aufweist. Bei Temperaturen oberhalb der oberen kritischen Lösungstemperatur (UCST) weist das thermoresponsive Polymer dann eine gute Wasserlöslichkeit auf, vorzugsweise ist das thermoresponsive Polymer dann vollständig mit Wasser mischbar. Bei Temperaturen unterhalb der oberen kritischen Lösungstemperatur (UCST) weist das thermoresponsive Polymer eine schlechte Wasserlöslichkeit auf, es liegt also eine Mischungslücke zwischen dem thermoresponsiven Polymer und Wasser vor. Dies ist beispielsweise auch in R. Liu, M. Fraylich und B. R. Saunders, Colloid. Poly. Sci. 2009, 287, 627-643 und V. Aseyev, H. Tenhu und F. M. Winnik, Adv. Polym. Sci. 2011, 242, 29-89*,* beschrieben.

Unter der unteren kritischen Lösungstemperatur (LCST; lower critical solution temperature) wird also die Temperatur verstanden, bei und oberhalb der das thermoresponsive Polymer und Wasser zwei Phasen bilden, das thermoresponsive Polymer und Wasser also eine Mischungslücke aufweisen.

Ohne die Erfindung hierauf beschränken zu wollen, besteht die Vorstellung, dass bei Temperaturen unterhalb der kritischen Lösungstemperatur (LCST) das thermoresponsive Polymer als offenkettiges Knäuel vorliegt. Dadurch kann Wasser gut in die Polymerketten eindringen und das Polymer quellen. Bei Temperaturen unterhalb der unteren kritischen Lösungstemperatur (LCST) sind die Wechselwirkungen zwischen dem Wasser und den Polymerketten energetisch vorteilhafter als die Wechselwirkungen der Polymerketten untereinander innerhalb des Knäuels. Im Gegensatz dazu, liegt das thermoresponsive Polymer bei Temperaturen größer oder gleich der unteren kritischen Lösungstemperatur (LCST) als kollabiertes Knäuel vor und die Wechselwirkungen der Polymerketten untereinander innerhalb des Knäuels sind energetisch vorteilhafter als die Wechselwirkungen zwischen dem Wasser und den Polymerketten. Das Wasser wird dann aus dem thermoresponsiven Polymer herausgedrängt und das thermoresponsive Polymer liegt als kompaktes Knäuel vor. Anders ausgedrückt bedeutet dies, dass das thermoresponsive Polymer bei Temperaturen gleich oder oberhalb der unteren kritischen Lösungstemperatur (LCST) Wasser abgibt.

Erfindungsgemäß wird die untere kritische Lösungstemperatur (LCST) mittels dynamischer Differenzkalorimetrie (DDK; differential scanning calorimetry, DSC) oder mittels Trübungsmessung bestimmt. Siehe hierzu auch V. Aseyev, H. Tenhu und F. M. Winnik, Adv. Polym. Sci. 2011, 242, 42 und R. Liu, M. Fraylich und B. R. Saunders, Colloid. Polym. Sci. 2009, 287, 630*.*

Die Komponente (A) weist eine untere kritische Lösungstemperatur (LCST) auf, wobei die untere kritische Lösungstemperatur (LCST) im Bereich von 5 bis 70 °C liegt, bevorzugt im Bereich von 10 bis 60 °C und insbesondere bevorzugt im Bereich von 15 bis 50 °C, bestimmt mittels dynamischer Differenzkalorimetrie (DDK) oder Trübungsmessung.

Die Komponente (A) weist üblicherweise eine Glasübergangstemperatur (T_{G(A)}) auf. Die Glasübergangstemperatur (T_{G(A)}) der Komponente (A) liegt beispielsweise im Bereich von 15 bis 150 °C, bevorzugt im Bereich von 20 bis 100 °C und insbesondere bevorzugt im Bereich von 30 bis 100 °C, bestimmt mittels dynamischer Differenzkalorimetrie (DDK; differential scanning calorimetry, DSC). Siehe hierzu auch DIN 53765 und DIN 51007.

Es versteht sich von selbst, dass sich die Glasübergangstemperatur (T_{G(A)}) der Komponente (A) auf die wasserfreie Komponente (A) bezieht. Die Glasübergangstemperatur (T_{G(A)}) der Komponente (A) bezieht sich also auf die Glasübergangstemperatur (T_{G(A)}) der reinen Komponente (A).

Darüber hinaus weist die Komponente (A) üblicherweise eine Schmelztemperatur (T_{M(A)}) auf. Die Schmelztemperatur (T_{M(A)}) der Komponente (A) liegt üblicherweise im Bereich von 20 bis 250 °C, bevorzugt im Bereich von 25 bis 200 °C und insbesondere bevorzugt im Bereich von 50 bis 180 °C, bestimmt mittels dynamischer Differenzkalorimetrie (DDK; differential scanning calorimetry, DSC). Siehe hierzu auch DIN 53765.

Als Komponente (A) eignen sich alle Polymere, die thermoresponsiv im Sinne der vorliegenden Erfindung sind. Vorzugsweise ist die Komponente (A) ausgewählt aus der Gruppe bestehend aus Poly(meth)acrylaten, Poly(meth)acrylamiden, Poly(meth)acryloylpyrrolidinen, Poly(meth)acryloylpiperidinen, Poly-N-vinylamiden, Polyoxazolinen, Polyvinyloxazolidonen, Polyvinylcaprolactonen, Polyvinylcaprolactamen, Polyethern, Hydroxypropylcellulosen, Polyvinylethern und Polyphosphoestern. Bevorzugt ist die Komponente (A) ausgewählt aus der Gruppe bestehend aus Poly(meth)acrylaten, Poly(meth)acrylamiden, Poly-N-vinylamiden, Polyoxazolinen, Polyvinylcaprolactamen, Polyethern, Hydroxypropylcellulosen und Polyvinylethern.

In einer weiteren bevorzugten Ausführungsform ist die Komponente (A) ausgewählt aus der Gruppe bestehend aus Poly(meth)acrylaten, Poly(meth)acrylamiden, Poly(meth)acryloylpyrrolidinen, Poly(meth)acryloylpiperidinen, Poly-N-vinylamiden, Polyoxazolinen, Polyvinyloxazolidonen, Polyvinylcaprolactonen, Polyvinylcaprolactamen, Polyethern, Polyvinylethern und Polyphosphoestern. Bevorzugt ist die Komponente (A) ausgewählt aus der Gruppe bestehend aus Poly(meth)acrylaten, Poly(meth)acrylamiden, Poly-N-vinylamiden, Polyoxazolinen, Polyvinylcaprolactamen, Polyethern und Polyvinylethern.

Gegenstand der vorliegenden Erfindung ist daher auch ein erfindungsgemäßes Kompositmaterial, bei dem die Komponente (A) ausgewählt ist aus der Gruppe bestehend aus Poly(meth)acrylaten, Poly(meth)acrylamiden, Poly(meth)acryloylpyrrolidinen, Poly(meth)acryloylpiperidinen, Poly-N-vinylamiden, Polyoxazolinen, Polyvinyloxazolidonen, Polyvinylcaprolactonen, Polyvinylcaprolactamen, Polyethern, Hydroxypropylcellulosen, Polyvinylethern und Polyphosphoestern.

Unter Poly(meth)acrylaten werden im Rahmen der vorliegenden Erfindung sowohl Polyacrylate als auch Polymethacrylate sowie deren Copolymere mit anderen Monomeren verstanden.

Geeignete Poly(meth)acrylate sind dem Fachmann als solche bekannt. Vorzugsweise sind die Poly(meth)acrylate ausgewählt aus der Gruppe bestehend aus Poly(methyl-2-isobutyracrylat), Poly[2-(dimethylamino)ethylmethacrylat] (PDMAEMA), Poly[2-(2-ethoxyethoxy)ethylacrylat] (PEEO2A), Poly[2-(2-methoxyethoxy)ethylmethacrylat] (PMEO2MA), Poly(2-hydroxypropylacrylat) (PHPA), Polyhydroxyethylmethacrylat (PolyHEMA) und methoxy-terminierten dendronisierten Poly(meth)acrylaten. Bevorzugte Poly(meth)acrylate sind ausgewählt aus der Gruppe bestehend aus Poly(methyl-2-isobutyracrylat), Poly[2-(dimethylamino)ethylmethacrylat] (PDMAEMA), Poly[2-(2-ethoxyethoxy)ethylacrylat] (PEEO2A), Poly[2-(2-methoxyethoxy)ethylmethacrylat] (PMEO2MA) und Poly(2-hydroxypropylacrylat) (PHPA).

Es versteht sich von selbst, das als thermoresponsives Polymer eingesetzte Polyacrylate von den, wie vorstehend beschrieben, als Superabsorber eingesetzten verzweigten Polyacrylaten verschieden sind. Als thermoresponsives Polymer eingesetzte Polyacrylate weisen üblicherweise keine Carboxylatgruppen (-COO⁻), sondern ausschließlich Carbonsäuregruppen (-COOH) auf.

Auch Alkoxy-terminierte hyperverzweigte Poly(meth)acrylate können verwendet werden.

Unter Poly(meth)acrylamiden werden im Rahmen der vorliegenden Erfindung Polyacrylamide, Polymethacrylamide sowie deren Copolymere mit anderen Monomeren verstanden. Diese sind dem Fachmann als solche bekannt. Beispielsweise sind Poly(meth)acrylamide ausgewählt aus der Gruppe bestehend aus Poly(N-n-propylacrylamid) (PnPAAm), Poly(N-isopropylacrylamid) (PNiPAAm), Poly(N-n-propylmethacrylamid) (PnPMAAm), Poly(N-isopropylmethacrylamid) (PiPMAAm), Poly(N-(L)-(1-hydroxymethyl)propylmethacrylamid) (P(L-HMPNAAm)), Poly(N,N-diethylacrylamid) (PDEAAm), Poly(N,N-ethylmethylacrylamid) (PNNEMAAm), Poly(N-ethylmethacrylamid) (PNEMAAm), Poly(N-ethylacrylamid) (PEAAm), Poly(N-ethylmethacrylamid) (PEMAAm) und Poly(N-cyclopropylacrylamid) (PcPAAm). Bevorzugte Poly(meth)acrylamide sind ausgewählt aus der Gruppe bestehend aus Poly(N-n-propylacrylamid) (PnPAAm), Poly(N-isopropylacrylamid) (PNiPAAm), Poly(N-n-propylmethacrylamid) (PnPMAAm), Poly(N-(L)-(1-hydroxymethyl)-propylmethacrylamid) (P(L-HMPNAAm)), Poly(N,N-diethylacrylamid) (PDEAAm), Poly(N-ethylmethacrylamid) (PEMAAm) und Poly(N-cyclopropylacrylamid) (PcPAAm).

Die Bezeichnung Poly(meth)acryloylpyrrolidine umfasst im Rahmen der vorliegenden Erfindung sowohl Polymethacryloylpyrrolidine als auch Polyacryloylpyrrolidine sowie deren Copolymere mit anderen Monomeren. Diese sind dem Fachmann als solche bekannt. Erfindungsgemäß bevorzugt als Poly(meth)acryloylpyrrolidine ist Poly(N-acryloylpyrrolidin).

Im Rahmen der vorliegenden Erfindung umfassen Poly(meth)acryloylpiperidine sowohl Polyacryloylpiperidine als auch Polymethacryloylpiperidine sowie deren Copolymere mit anderen Monomeren. Bevorzugt als Poly(meth)acryloylpiperidine ist Poly(N-acryloyl)piperidin (PAOPip).

Poly-N-vinylamide sind dem Fachmann bekannt und beispielsweise ausgewählt aus der Gruppe, bestehend aus Poly(N-vinylpropylacetamid) und Poly(N-vinylisobutyramid) (PViBAm).

Als Polyoxazoline können alle dem Fachmann bekannten Polyoxazoline eingesetzt werden. Beispielsweise sind die Polyoxazoline ausgewählt aus der Gruppe bestehend aus Poly(2-n-propyl-2-oxazolin) (PnPOz) und Poly(2-isopropyl-2-oxazolin) (PiPOz).

Polyvinyloxazolidone sind dem Fachmann bekannt. Ein geeignetes Polyvinyloxazolidon ist beispielsweise Poly(N-vinyl-5-methyl-2-oxazolidon).

Geeignete Polyvinylcaprolactone sind dem Fachmann bekannt. Bevorzugt sind Poly(N-vinyl)caprolacton und dessen Copolymere.

Geeignete Polyvinylcaprolactame sind dem Fachmann als solche ebenfalls bekannt, beispielsweise Poly(N-vinylcaprolactam) (PVCL).

Geeignete Polyether sind dem Fachmann bekannt. Beispielsweise sind die Polyether ausgewählt aus der Gruppe bestehend aus Poly(ethylenglycol) (PEG), Polyethylenglycol-polypropylenglycol-copolyethern, hydrophob endverkapptem Poly(ethylenoxid-co-propylenoxid) und hyperverzweigten Polyethern. Bevorzugt sind die Polyether mit hydrophoben Gruppen terminiert.

Geeignete Hydroxypropylcellulosen sind dem Fachmann bekannt, beispielsweise Hydroxypropylcellulose (HPC) und Hydroxypropylmethylcellulose (HPMC).

Die Herstellung von Hydroxypropylcellulose und Hydroxypropylmethylcellulose ist dem Fachmann allgemein bekannt, beispielweise durch Reaktion von Cellulose oder Methylcellulose mit Propylenoxid.

Geeignete Polyvinylether sind dem Fachmann als solche bekannt und sind beispielsweise ausgewählt aus der Gruppe bestehend aus Poly(methylvinylether) (PMVEth), Poly(2-methoxyethylvinylether) (PMOVEth), Poly(2-ethoxyethylvinylether) (PEOVEth), Poly(2-(2-ethoxy)ethoxyethylvinylether) und Poly(4-hydroxybutylvinylether).

Zudem sind aus Oligovinylethern, wie Ethylenoxid-vinylether, Propylenoxidvinylether oder n-Butylenoxid-vinylether hergestellte Homo- oder Copolymere geeignet.

Geeignete Polyphosphoester sind dem Fachmann ebenfalls bekannt und beispielsweise ausgewählt aus der Gruppe bestehend aus Poly(2-ethoxy-2-oxo-1,3,2-dioxaphospholan) und Poly(2-isopropoxy-2-oxo-1,3,2-dioxaphospholan). Poly(2-ethoxy-2-oxo-1,3,2-dioxaphospholan) ist auch bekannt unter dem Namen Poly(ethylethylenphosphat). Poly(2-isopropoxy-2-oxo-1,3,2-dioxaphospholan) ist auch bekannt unter dem Namen Poly(isopropylethylenphosphat).

Besonders bevorzugt ist die Komponente (A) daher ausgewählt aus der Gruppe bestehend aus Poly(methyl-2-isobutyracrylat), Poly[2-(dimethylamino)ethylmethacrylat] (PDMAEMA), Poly[2-(2-ethoxyethoxy)ethylacrylat] (PEEO2A), Poly[2-(2-methoxyethoxy)ethylmethacrylat] (PMEO2MA), Poly(2-hydroxypropylacrylat) (PHPA), Poly(N-n-propylacrylamid) (PnPAAm), Poly(N-isopropylacrylamid) (PNiPAAm), Poly(N-n-propylmethacrylamid) (PnPMAAm), Poly(N-(L)-(1-hydroxymethyl)-propylmethacrylamid) (P(L-HMPNAAm)), Poly(N,N-diethylacrylamid) (PDEAAm), Poly(N-ethylmethacrylamid) (PEMAAm), Poly(N-cyclopropylacrylamid) (PcPAAm), Poly(N-vinylpropylacetamid), Poly(N-vinylisobutyramid) (PViBAm), Poly(2-n-propyl-2-oxazolin) (PnPOz), Poly(2-isopropyl-2-oxazolin) (PiPOz), Polyvinylcaprolactam (PVCL), Polyethylenglycolen (PEG), Polyethylenglycol-polypropylenglycol-copolyethern, hydrophob endverkappten Poly(ethylenoxid-co-propylenoxid)polyethern, hyperverzweigten Polyethern, Hydroxypropylcellulose (HPC), Poly(methylvinylether) (PMVEth), Poly(2-methoxyethylvinylether) (PMOVEth), Poly(2-ethoxyethylvinylether) (PEOVEth), Poly(2-(2-ethoxy)ethoxyethylvinylether) und Poly(4-hydroxybutylvinylether).

### Komponente (B)

Erfindungsgemäß ist die Komponente (B) mindestens ein organischer Schaumstoff.

Im Rahmen der vorliegenden Erfindung bedeutet "mindestens ein organischer Schaumstoff" sowohl genau ein organischer Schaumstoff als auch eine Mischung aus zwei oder mehreren organischen Schaumstoffen.

Eine Mischung aus zwei oder mehreren organischen Schaumstoffen wird auch als Blend oder als Hybridschaumstoff bezeichnet.

Unter einem organischen Schaumstoff wird im Rahmen der vorliegenden Erfindung ein organisches Polymer verstanden, das eine poröse Struktur und eine niedrige Dichte aufweist. Organische Schaumstoffe im Rahmen der vorliegenden Erfindung sind also entsprechend DIN 7726, Mai 1982, definiert.

Beispielsweise liegt die Dichte der Komponente (B) im Bereich von 10 bis 1000 g/cm³, bevorzugt im Bereich von 20 bis 500 g/cm³ und insbesondere bevorzugt im Bereich von 30 bis 200 g/cm³. Die Bestimmung der Dichte von Schaumstoffen ist zum Beispiel beschrieben in Becker/Braun, Kunststoff Handbuch, Band 7, Polyurethane, Carl Hanser Verlag München Wien 1993, Kapitel 9.2.4*.*

Die Komponente (B) weist erfindungsgemäß eine poröse Struktur auf. Dies bedeutet, dass die Komponente (B) Zellen aufweist. Diese Zellen weisen üblicherweise eine Größe im Bereich von 1 bis 3000 µm, bevorzugt im Bereich von 10 bis 1000 µm und insbesondere bevorzugt im Bereich von 20 bis 500 µm auf, bestimmt mittels Mikroskopie und Bildanalyse. Siehe hierzu auch Becker/Braun, Kunststoff Handbuch, Band 7, Polyurethane, Carl Hanser Verlag München Wien 1993, Kapitel 9.2.5 und "Charakterisierung der Porenstruktur von PUR-Weichschäumen mittels Bildanalyse", M. Herbst, W. Rasemann, B. Mündörfer, A. Böhme, FAPU 16, 2003*.*

Die Komponente (B) kann geschlossenzellig oder offenzellig sein. Bevorzugt ist die Komponente (B) offenzellig.

Bei geschlossenzelligen Schaumstoffen stehen die einzelnen Zellen des Schaumstoffs nicht miteinander in Verbindung, sie sind jeweils für sich abgeschlossen.

Bei offenzelligen Schaumstoffen dagegen, stehen die Zellen miteinander in Verbindung.

Erfindungsgemäß bevorzugt ist die Komponente (B) zu mindestens 10 % offenzellig, besonders bevorzugt zu mindestens 50 % und insbesondere bevorzugt zu mindestens 80 %. Die Offenzelligkeit wird bestimmt mittels Luftvergleichspyknometer wie zum Beispiel beschrieben in Becker/Braun, Kunststoff Handbuch, Band 7, Polyurethane, Carl Hanser Verlag München Wien 1993, Kapitel 9.2.6*.*

Gegenstand der vorliegenden Erfindung ist somit auch ein erfindungsgemäßes Kompositmaterial, bei dem die Komponente (B) zu mindestens 50 % offenzellig ist.

Die Komponente (B) kann ein organischer Hartschaumstoff sein, ein organischer Halbhartschaumstoff oder ein organischer Weichschaumstoff. Bevorzugt ist die Komponente (B) ein organischer Weichschaumstoff gemäß der Klassifizierung nach DIN 7726, Stand Mai 1982.

Die Komponente (B) ist erfindungsgemäß ausgewählt aus der Gruppe bestehend aus Polyurethanschaumstoffen.

Verfahren zur Herstellung von organischen Schaumstoffen sind dem Fachmann als solche bekannt.

Die Komponente (B) weist üblicherweise eine oder mehrere Glasübergangstemperaturen (T_{G(B)}) auf. Die Glasübergangstemperaturen (T_{G(B)}) der Komponente (B) liegt üblicherweise im Bereich von - 40 bis 150 °C, bevorzugt im Bereich von - 30 bis 120 °C und insbesondere bevorzugt im Bereich von - 30 bis 100 °C, bestimmt mittels dynamischer Differenzkalorimetrie (DDK). Siehe hierzu auch DIN 53765 und DIN 51007.

### Komponente (C)

Erfindungsgemäß enthält das Kompositmaterial zusätzlich eine Komponente (C) mindestens ein Tonmineral.

"Mindestens ein Tonmineral" bedeutet im Rahmen der vorliegenden Erfindung sowohl genau ein Tonmineral als auch eine Mischung aus zwei oder mehreren Tonmineralen.

Unter "Tonmineralen" werden im Rahmen der vorliegenden Erfindung schichtartig aufgebaute Silikate verstanden.

Die Komponente (C) ist damit mindestens ein schichtartig aufgebautes Silikat.

Die erfindungsgemäß verwendeten schichtartig aufgebauten Silikate sind dem Fachmann also solche bekannt.

Schichtartig aufgebaute Silikate enthalten üblicherweise Siliziumatome, die tetraedrisch von Sauerstoffatomen umgeben (koordiniert) sind. Erfindungsgemäß besonders bevorzugt sind schichtartig aufgebaute Silikate, die Aluminiumatome, die oktaedrisch von Sauerstoffatomen umgeben (koordiniert) sind, enthalten. Darüber hinaus enthalten schichtartig aufgebaute Silikate üblicherweise weitere Elemente, wie beispielsweise Natrium, Barium oder Calcium.

In den schichtartig aufgebauten Silikaten sind die tetraedrisch von Sauerstoffatomen koordinierten Siliziumatome üblicherweise schichtförmig angeordnet (Tetraederschicht). Ebenso sind die oktaedrisch von Sauerstoffatomen koordinierten Aluminiumatome üblicherweise schichtförmig angeordnet (Oktaederschicht). In den schichtartig aufgebauten Silikaten können sich die Oktaederschichten mit den Tetraederschichten abwechseln, ebenso ist es beispielsweise möglich, dass eine Oktaederschicht auf zwei Tetraederschichten folgt.

Zwischen den Schichten kann das mindestens eine Tonmineral Wasser einlagern. Dadurch quillt das mindestens eine Tonmineral. Die Einlagerung von Wasser in die Schichten des mindestens einen Tonminerals ist reversibel, das Wasser zwischen den Schichten kann also durch Trocknung wieder entfernt werden.

Die Komponente (C) ist daher bevorzugt quellbar.

Unter "quellbar" wird im Rahmen der vorliegenden Erfindung also verstanden, dass die Komponente (C) Wasser zwischen den Schichten einlagern kann und dass dieses Wasser durch Trocknung aus dem Raum zwischen den Schichten wieder entfernt werden kann.

Wenn Wasser zwischen den Schichten der Komponente (C) eingelagert ist, dann ist die Komponente (C) gequollen. Ist kein Wasser zwischen den Schichten der Komponente (C) eingelagert, dann ist die Komponente (C) ungequollen.

Die Komponente (C) ist bevorzugt ausgewählt aus der Gruppe bestehend aus Montmorilloniten und Kaoliniten.

Gegenstand der vorliegenden Erfindung ist daher auch ein erfindungsgemäßes Kompositmaterial, bei dem die Komponente (C) ausgewählt ist aus der Gruppe bestehend aus Montmorilloniten und Kaoliniten.

Die Komponente (C) kann als das reine mindestens eine Tonmineral eingesetzt werden. Bevorzugt wird die Komponente (C) als Gestein eingesetzt, das das mindestens eine Tonmineral enthält, gegebenenfalls auch als Mischung mit anderen Begleitmineralien, wie beispielsweise Glimmer, Quarz, Feldspat, Pyrit und/oder Calcit. Gesteine, die das mindestens eine Tonmineral enthalten, sind dem Fachmann bekannt und beispielsweise Kaolin und Bentonit.

Wird die Komponente (C) daher als Gestein eingesetzt, so ist die Komponente (C) bevorzugt ausgewählt aus der Gruppe bestehend aus Kaolin und Bentonit.

Gegenstand der vorliegenden Erfindung ist daher auch ein erfindungsgemäßes Kompositmaterial, bei dem die Komponente (C) ausgewählt ist aus der Gruppe bestehend aus Kaolin und Bentonit.

Kaolin ist dem Fachmann als solches bekannt. Der Hauptbestandteil von Kaolin ist das Mineral Kaolinit. Darüber hinaus kann Kaolin noch weitere Minerale enthalten. Im Rahmen der vorliegenden Erfindung werden unter der Bezeichnung "Kaolin" außerdem auch die thermisch aktivierten Varianten von Kaolin verstanden, wie beispielsweise Metakaolin.

Bentonit ist dem Fachmann ebenfalls bekannt. Der Hauptbestandteil von Bentonit ist Montmorillonit. Daneben kann Bentonit zusätzlich beispielsweise Quarz, Glimmer, Feldspat, Pyrit oder Calcit enthalten.

### Herstellung des Kompositmaterials

Das erfindungsgemäße Kompositmaterial kann nach allen dem Fachmann bekannten Verfahren hergestellt werden.

Gegenstand der vorliegenden Erfindung ist insbesondere ein Verfahren zur Herstellung des erfindungsgemäßen Kompositmaterials umfassend die Schritte
a) Bereitstellung einer Mischung (M), die das mindestens eine thermoresponsive Polymer (A) enthält,
b) Herstellung des mindestens einen organischen Schaumstoffs (B) in Gegenwart der in Schritt a) bereitgestellten Mischung (M) unter Erhalt des Kompositmaterials,
wobei die in Schritt a) bereitgestellte Mischung (M) zusätzlich mindestens ein Tonmaterial (C) enthält.

Für die in der Mischung (M) enthaltene Komponente (C) gelten die zuvor beschriebenen Ausführungen und Bevorzugungen für die in dem Kompositmaterial enthaltene Komponente (C) entsprechend.

Beispielsweise enthält die Mischung (M) im Bereich von 99,5 bis 10 Gew.-% der Komponente (A) und im Bereich von 0,5 bis 90 Gew.-% der Komponente (C), jeweils bezogen auf die Summe der Gewichtsprozente der Komponenten (A) und (C), bevorzugt bezogen auf das Gesamtgewicht der Mischung (M).

Bevorzugt enthält die Mischung (M) im Bereich von 99 bis 50 Gew.-% der Komponente (A) und im Bereich von 1 bis 50 Gew.-% der Komponente (C), jeweils bezogen auf die Summe der Gewichtsprozente der Komponenten (A) und (C), bevorzugt bezogen auf das Gesamtgewicht der Mischung (M).

Insbesondere bevorzugt enthält die Mischung (M) im Bereich von 95 bis 70 Gew.-% der Komponente (A) und im Bereich von 5 bis 30 Gew.-% der Komponente (C), jeweils bezogen auf die Summe der Gewichtsprozente der Komponenten (A) und (C), bevorzugt bezogen auf das Gesamtgewicht der Mischung (M).

Die Mischung (M) enthält das mindestens eine thermoresponsive Polymer (A) bevorzugt in Form von Partikeln, ebenso enthält sie das mindestens eine Tonmineral (C) bevorzugt in Form von Partikeln. Die Partikel des mindestens einen thermoresponsiven Polymers (A) weisen beispielsweise einen D50-Wert im Bereich von 200 nm bis 5 mm auf, die Partikel des mindestens einen Tonminerals (C) weisen beispielsweise ein D50-Wert im Bereich von 50 nm bis 3 mm auf, bestimmt mittels Lichtstreuung und/oder Siebung.

Bevorzugt weisen die Partikel des mindestens einen thermoresponsiven Polymers (A) einen D50-Wert im Bereich von 300 nm bis 4 mm und die Partikel des mindestens einen Tonminerals (C) einen D50-Wert im Bereich von 50 nm bis 1 mm auf, bestimmt mittels Lichtstreuung und/oder Siebung.

Insbesondere bevorzugt weisen die Partikel des mindestens einen thermoresponsiven Polymers (A) einen D50-Wert im Bereich von 500 nm bis 3 mm und die Partikel des mindestens einen Tonminerals (C) einen D50-Wert im Bereich von 100 nm bis 0,5 mm auf, bestimmt mittels Lichtstreuung und/oder Siebung.

Gegenstand der vorliegenden Erfindung ist daher auch ein erfindungsgemäßes Verfahren, bei dem die im Schritt a) bereitgestellte Mischung (M) das mindestens eine thermoresponsive Polymer (A) in Form von Partikeln enthält und das mindestens eine Tonmineral (C) in Form von Partikeln enthält, wobei die Partikel des mindestens einen thermoresponsiven Polymers (A) einen D50-Wert im Bereich von 200 nm bis 5 mm aufweisen und die Partikel des mindestens einen Tonminerals (C) einen D50-Wert im Bereich von 50 nm bis 3 mm aufweisen, bestimmt mittels Lichtstreuung und/oder Siebung.

Unter dem "D50-Wert" wird die Partikelgröße verstanden, bei der 50 vol.% der Partikel, bezogen auf das Gesamtvolumen der Partikel, kleiner oder gleich dem D50-Wert sind und 50 vol.% der Partikel, bezogen auf das Gesamtvolumen der Partikelgröße, größer als der D50-Wert sind.

Darüber hinaus kann die Mischung (M) mindestens ein Dispersionsmittel enthalten. Als Dispersionsmittel bevorzugt ist Wasser.

Bevorzugt enthält die Mischung (M) kein Wasser, insbesondere bevorzugt enthält die Mischung (M) kein Dispersionsmittel.

Es ist daher bevorzugt, dass die in Schritt a) bereitgestellte Mischung (M) trocken ist.

Unter "trocken" wird im Rahmen der vorliegenden Erfindung verstanden, dass die Mischung (M) weniger als 10 Gew.-%, bevorzugt weniger als 5 Gew.-% und besonders bevorzugt weniger als 3 Gew.-% Wasser enthält, insbesondere bevorzugt enthält die Mischung (M) weniger als 10 Gew.-%, bevorzugt weniger als 5 Gew.-% und insbesondere bevorzugt weniger als 1 Gew.-% Dispersionsmittel, jeweils bezogen auf das Gesamtgewicht der Mischung (M).

Die Mischung (M) kann in Schritt a) nach allen dem Fachmann bekannten Methoden bereitgestellt werden. Bevorzugt wird die Mischung (M) in Schritt a) bereitgestellt durch Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern oder Phosphoestern. Bei der Polymerisation des mindestens einen Monomers wird das mindestens eine thermoresponsive Polymer (A) erhalten.

Besonders bevorzugt wird die Mischung (M) in Schritt a) bereitgestellt durch Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-Vinylamiden, Vinyloxazolidonen, Vinylcaprolactonen, Vinylcaprolactamen und Vinylethern.

Diese Polymerisationen sind dem Fachmann bekannt und beispielsweise radikalsiche Polymerisationen, Polyadditionen oder Polykondensationen.

Gegenstand der vorliegenden Erfindung ist daher auch ein erfindungsgemäßes Verfahren, bei dem die Bereitstellung der Mischung (M) in Schritt a) eine Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-vinylamiden, Oxazolinen, Vinyloxazolidonen, Vinylcaprolactonen, Vinylcaprolactamen, Alkylenoxiden, Vinylethern und Phosphoestern, wobei das mindestens eine thermoresponsive Polymer (A) erhalten wird, umfasst.

Unter (Meth)acrylaten werden im Rahmen der vorliegenden Erfindung sowohl Acrylate, als auch Methacrylate verstanden. Geeignete (Meth)acrylate sind dem Fachmann als solche bekannt und beispielsweise ausgewählt aus der Gruppe bestehend aus Methyl-2-isobutyracrylat, 2-(dimethylamino)ethylmethacrylat, 2-(2-ethoxyethoxy)ethylacrylat, 2-(2-methoxyethoxy)ethylmethacrylat, 2-Hydroxyethylmethacrylat und 2-Hydroxypropylacrylat.

Der Begriff (Meth)acrylamide umfasst im Rahmen der vorliegenden Erfindung sowohl Acrylamide als auch Methacrylamide. Geeignete (Meth)acrylamide sind beispielsweise ausgewählt aus der Gruppe bestehend aus N-n-Propylacrylamid, N-Isopropylacrylamid, N-n-Propylmethacrylamid, N-Isopropylmethacrylamid, N-(L)-1-Hydroxymethylpropylmethacrylamid, N-N-Diethylacrylamid, N,N-Ethylmethacrylamid und N-Cyclopropylacrylamid.

Der Begriff (Meth)acryloylpyrrolidine umfasst im Rahmen der vorliegenden Erfindung sowohl Acryloylpyrrolidine als auch Methacryloylpyrrolidine. Bevorzugte (Meth)acryloylpyrrolidine sind N-Acryloylpyrrolidine.

Unter (Meth)acryloylpiperidinen werden im Rahmen der vorliegenden Erfindung sowohl Acryloylpiperidine als auch Methacryloylpiperidine verstanden. Bevorzugte (Meth)acryloylpiperidine sind N-Acryloylpiperidine.

Geeignete N-Vinylamide sind dem Fachmann als solche bekannt und beispielsweise N-Vinylpropylacetamid oder N-Vinylisobutyramid.

Geeignete Oxazoline sind dem Fachmann ebenfalls bekannt und beispielsweise ausgewählt aus der Gruppe bestehend aus 2-(n-Propyl-)2-oxazolin und 2-Isopropyl-2-oxazolin.

Geeignete Vinyloxazolidone sind dem Fachmann ebenfalls bekannt. Ein bevorzugtes Vinyloxazolidon ist N-Vinyl-5-methyl-2-oxazolidon.

Geeignete Vinylcaprolactone sind dem Fachmann ebenso bekannt wie Vinylcaprolactame.

Geeignete Alkylenoxide sind dem Fachmann ebenfalls bekannt und beispielsweise ausgewählt aus der Gruppe bestehend aus Ethylenoxid und Propylenoxid.

Geeignete Vinylether sind dem Fachmann ebenfalls bekannt und beispielsweise ausgewählt aus der Gruppe bestehend aus Methylvinylether, 2-Methoxyethylvinylether, 2-Ethoxyethylvinylether, 2-(2-Ethoxy)ethoxyethylvinylether und 4-Hydroxybutylvinylether.

Geeignete Phosphoester sind dem Fachmann bekannt und beispielsweise 2-Ethoxy-2-oxo-1,3,2-dioxaphospholan und 2-Isopropoxy-2-oxo-1,3,2-dioxaphospholan.

Ist das mindestens eine thermoresponsive Polymer (A) ein Copolymer, so versteht es sich von selbst, dass zur Bereitstellung der Mischung (M) in Schritt a) zusätzlich zu dem mindestens einen Monomer, mindestens ein Comonomer eingesetzt wird. Derartige Comonomere sind dem Fachmann bekannt und beispielsweise Styrol, Methylstyrol, C₁-C₆-Alkylacrylate, Divinylbenzol, Diacrylate, vorzugsweise auf Basis von C₂- bis C₆-Diolen, N,N-Methylenbisacrylamid oder [3-(Methacryloylamino)propyl]trimethylammoniumchlorid.

Enthält die in Schritt a) bereitgestellte Mischung (M) zusätzlich eine Komponente (C), so ist es bevorzugt, dass die Polymerisation des mindestens einen Monomeren in Gegenwart des mindestens einen Tonminerals (C) erfolgt.

Gegenstand der vorliegenden Erfindung ist daher auch ein erfindungsgemäßes Verfahren, bei dem die Bereitstellung der Mischung (M) in Schritt a) in der Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-vinylamiden, Oxazolinen, Vinyloxazolidonen, Vinylcaprolactonen, Vinylcaprolactamen, Alkylenoxiden, Vinylethern und Phosphoestern, wobei das mindestens eine thermoresponsive Polymer (A) erhalten wird, in Gegenwart des mindestens einen Tonminerals (C) umfasst.

Die Polymerisation des mindestens einen Monomers kann nach allen dem Fachmann bekannten Methoden erfolgen. Geeignete Methoden zur Polymerisation des mindestens einen Monomers sind beispielsweise eine radikalische Polymerisation, eine Polyaddition oder eine Polykondensation.

Bevorzugt erfolgt die Polymerisation mittels radikalischer Polymerisation in Gegenwart eines Initiators.

Bevorzugt umfasst die Bereitstellung der Mischung (M) in Schritt a) die folgenden Schritte
a1) Bereitstellen einer ersten Dispersion, die das mindestens eine Tonmineral (C), ein Dispersionsmittel, ausgewählt aus der Gruppe bestehend aus Wasser und einem organischen Lösungsmittel, und mindestens ein Monomer, ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, enthält,
a2) Polymerisation des in der in Schritt a1) in der ersten Dispersion bereitgestellten mindestens einen Monomers in der ersten Dispersion, wobei das mindestens eine thermoresponsive Polymer (A) erhalten wird, unter Erhalt einer zweiten Dispersion, die das mindestens eine Tonmineral (C), das Dispersionsmittel, ausgewählt aus der Gruppe bestehend aus Wasser und einem organischen Lösungsmittel und das mindestens eine thermoresponsive Polymer (A) enthält,
a3) Trocknen der in Schritt a2) erhaltenen zweiten Dispersion unter Erhalt der Mischung (M).

Gegenstand der vorliegenden Erfindung ist daher auch ein erfindungsgemäßes Verfahren, bei dem die Bereitstellung der Mischung (M) in Schritt a) die folgenden Schritte umfasst:
a1) Bereitstellen einer ersten Dispersion, die das mindestens eine Tonmineral (C), ein Dispersionsmittel, ausgewählt aus der Gruppe bestehend aus Wasser und einem organischen Lösungsmittel und mindestens ein Monomer ausgewählt aus der Gruppe bestehend aus (Meth)acrylaten, (Meth)acrylamiden, (Meth)acryloylpyrrolidinen, (Meth)acryloylpiperidinen, N-vinylamiden, Oxazolinen, Vinyloxazolidonen, Vinylcaprolactonen, Vinylcaprolactamen, Alkylenoxiden, Vinylethern und Phosphoestern, enthält,
a2) Polymerisation des in der in Schritt a1) bereitgestellten ersten Dispersion enthaltenen mindestens einen Monomers in der ersten Dispersion, wobei das mindestens eine thermoresponsive Polymer (A) erhalten wird, unter Erhalt einer zweiten Dispersion, die das mindestens eine Tonmineral (C), das Dispersionsmittel und das mindestens eine thermoresponsive Polymer (A) enthält,
a3) Trocknen der in Schritt a2) erhaltenen zweiten Dispersion unter Erhalt der Mischung (M).

"Ein Dispersionsmittel" bedeutet im Rahmen der vorliegenden Erfindung sowohl genau ein Dispersionsmittel als auch eine Mischung aus zwei oder mehreren Dispersionsmitteln.

Das Dispersionsmittel ist erfindungsgemäß ausgewählt aus Wasser und organischen Lösungsmitteln, bevorzugt ist das Dispersionsmittel Wasser.

Als organisches Lösungsmittel, das als Dispersionsmittel eingesetzt werden kann, eignen sich alle dem Fachmann bekannten organischen Lösungsmittel. Bevorzugt sind niedrig siedende organische Lösungsmittel, wobei unter "niedrigsiedenden organischen Lösungsmitteln" organische Lösungsmittel verstanden werden, die eine Siedetemperatur von < 140 °C aufweisen. Derartige organische Lösungsmittel sind dem Fachmann bekannt und beispielsweise ausgewählt aus der Gruppe bestehend aus Methanol, Ethanol, Toluol, Tetrahydrofuran, Xylol, Ethylester und Butylacetat.

Bevorzugt wird in Schritt a1) eine erste Dispersion bereitgestellt, die das mindestens eine Tonmineral (C), das Dispersionsmittel und mindestens ein Monomer ausgewählt aus der Gruppe bestehend aus (Meth)acrylaten, (Meth)acrylamiden, (Meth)acryloylpyrrolidinen, (Meth)acryloylpiperidinen, N-Vinylamiden, Vinyloxazolidonen, Vinylcaprolactonen, Vinylcaprolactamen und Vinylethern, enthält.

Die in Schritt a1) bereitgestellte erste Dispersion enthält beispielsweise im Bereich von 0,5 bis 30 Gew.-% des mindestens einen Tonminerals (C), im Bereich von 40 bis 94,5 Gew.-% des Dispersionsmittels und im Bereich von 5 bis 59,5 Gew.-% des mindestens einen Monomers, jeweils bezogen auf die Summe der Gewichtsprozente des mindestens einen Tonminerals (C), des Dispersionsmittels und des mindestens einen Monomers, bevorzugt bezogen auf das Gesamtgewicht der ersten Dispersion.

Bevorzugt enthält die erste Dispersion im Bereich von 0,5 bis 20 Gew.-% des mindestens einen Tonminerals (C), im Bereich von 50 bis 89,5 Gew.-% des Dispersionsmittels und im Bereich von 10 bis 49,5 Gew.-% des mindestens einen Monomers, jeweils bezogen auf die Summe der Gewichtsprozente des mindestens einen Tonminerals (C), des Dispersionsmittels und des mindestens einen Monomers, bevorzugt bezogen auf das Gesamtgewicht der ersten Dispersion.

Besonders bevorzugt enthält die erste Dispersion im Bereich von 0,5 bis 15 Gew.-% des mindestens einen Tonminerals im Bereich von 60 bis 84,5 Gew.-% des Dispersionsmittels und im Bereich von 15 bis 39,5 Gew.-% des mindestens einen Monomers, jeweils bezogen auf die Summe der Gewichtsprozente des mindestens einen Tonminerals (C), des Dispersionsmittels und des mindestens einen Monomers, bevorzugt bezogen auf das Gesamtgewicht der ersten Dispersion.

Darüber hinaus kann die erste Dispersion zusätzliche Komponenten enthalten. Derartige zusätzliche Komponenten sind beispielsweise Initiatoren oder Comonomere zu dem mindestens einen Monomer.

Geeignete Initiatoren sind dem Fachmann als solche bekannt und werden passend zu dem mindestens einen Monomer ausgewählt. Geeignete Initiatoren sind beispielsweise Ammoniumperoxodisulfat (APS), Kaliumperoxodisulfat (KPS), Aza-Diisobutyronitril (AIBN), Dibenzoylperoxid (DBPO) oder N,N,N',N'-Tetramethylethylendiamin (TEMEDA).

Die erste Dispersion enthält das mindestens eine Monomer üblicherweise gelöst in dem Dispersionsmittel. Sind zusätzliche Komponenten in der Dispersion enthalten, so sind diese üblicherweise ebenfalls in dem Dispersionsmittel gelöst. Das mindestens eine Tonmineral (C) liegt üblicherweise suspendiert in der Lösung des Dispersionsmittels und dem mindestens einen Monomer sowie gegebenenfalls der zusätzlichen Komponenten vor. Das Dispersionsmittel mit dem gelösten mindestens einen Monomer und gegebenenfalls der zusätzlichen Komponenten bildet dann das Dispersionsmedium, auch kontinuierliche Phase genannt, das mindestens eine Tonmineral (C) bildet die disperse Phase, auch innere Phase genannt.

Das mindestens eine Tonmineral (C) kann in der ersten Dispersion in Schritt a1) in gequollenem oder in ungequollenem Zustand vorliegen. Bevorzugt liegt das mindestens eine Tonmineral (C) in gequollenem Zustand vor.

Gegenstand der vorliegenden Erfindung ist daher auch ein erfindungsgemäßes Verfahren, bei dem das mindestens eine Tonmineral (C) in der ersten Dispersion in Schritt a1) in gequollenem Zustand vorliegt.

Es ist außerdem bevorzugt, dass zur Bereitstellung der ersten Dispersion in Schritt a1) zunächst das mindestens eine Tonmineral (C) in Wasser gequollen wird und anschließend das mindestens eine Monomer sowie gegebenenfalls die zusätzlichen Komponenten zu dieser Dispersion, die Wasser und das gequollene mindestens eine Tonmineral (C) enthält, gegeben werden.

Es ist außerdem möglich, dass zur Bereitstellung der ersten Dispersion in Schritt a1) zunächst das mindestens eine Tonmineral (C) in Wasser gequollen wird und anschließend das gequollene mindestens eine Tonmineral (C) zu dem Dispersionsmittel, dem mindestens einen Monomer sowie gegebenenfalls den zusätzlichen Komponenten gegeben wird.

In Schritt a2) wird das in der in Schritt a1) bereitgestellten ersten Dispersion enthaltene mindestens eine Monomer in der ersten Dispersion polymerisiert. Dabei wird das mindestens eine thermoresponsive Polymer (A) erhalten unter Erhalt einer zweiten Dispersion, die das mindestens eine Tonmineral (C), das Dispersionsmittel und das mindestens eine thermoresponsive Polymer (A) enthält.

Die Polymerisation des mindestens einen Monomers unter Erhalt des mindestens einen thermoresponsiven Polymers (A) ist dem Fachmann als solche bekannt.

Die in Schritt a2) erhaltene zweite Dispersion enthält das mindestens eine Tonmineral (C), das Dispersionsmittel und das mindestens eine thermoresponsive Polymer (A).

Beispielsweise enthält die zweite Dispersion im Bereich von 0,5 bis 30 Gew.-% des mindestens einen Tonminerals (C), im Bereich von 40 bis 94,5 Gew.-% des Dispersionsmittels und im Bereich von 5 bis 59,5 Gew.-% des mindestens einen thermoresponsiven Polymers (A), jeweils bezogen auf die Summe der Gewichtsprozente des mindestens einen Tonminerals (C), des Dispersionsmittels und des mindestens einen thermoresponsiven Polymers (A), bevorzugt bezogen auf das Gesamtgewicht der zweiten Dispersion.

Bevorzugt enthält die zweite Dispersion im Bereich von 1 bis 20 Gew.-% des mindestens einen Tonminerals (C), im Bereich von 49,5 bis 94 Gew.-% des Dispersionsmittels und im Bereich von 5 bis 49,5 Gew.-% des mindestens einen thermoresponsiven Polymers (A), jeweils bezogen auf die Summe der Gewichtsprozente des mindestens einen Tonminerals (C), des Dispersionsmittels und des mindestens einen thermoresponsiven Polymers (A), bevorzugt bezogen auf das Gesamtgewicht der zweiten Dispersion.

Besonders bevorzugt enthält die zweite Dispersion im Bereich von 1 bis 15 Gew.-% des mindestens einen Tonminerals (C), im Bereich von 59,5 bis 94 Gew.-% des Dispersionsmittels und im Bereich von 5 bis 39,5 Gew.-% des mindestens einen thermoresponsiven Polymers (A), jeweils bezogen auf die Summe der Gewichtsprozente des mindestens einen Tonminerals (C), des Dispersionsmittels und des mindestens einen thermoresponsiven Polymers (A), bevorzugt bezogen auf das Gesamtgewicht der zweiten Dispersion.

Darüber hinaus enthält die zweite Dispersion üblicherweise noch die zusätzlichen Komponenten, die in der ersten Dispersion enthalten waren. Es ist außerdem möglich, dass die zweite Dispersion noch Reste des mindestens einen Monomers enthält.

Die Summe der Gewichtsprozente des in der zweiten Dispersion enthaltenen mindestens einen Tonminerals (C), des Dispersionsmittels und des mindestens einen thermoresponsiven Polymers (A), sowie gegebenenfalls der zusätzlichen Komponenten ergibt üblicherweise 100 Gew.- %.

Wenn die zweite Dispersion zusätzliche Komponenten enthält, liegen diese üblicherweise gelöst im Dispersionsmittel vor.

Das mindestens eine Tonmineral (C) und das mindestens eine thermoresponsive Polymer (A) liegen in der zweiten Dispersion üblicherweise suspendiert im Dispersionsmittel vor. Das Dispersionsmittel bildet dann das Dispersionsmedium, auch kontinuierliche Phase genannt, das mindestens eine Tonmineral (C) und das mindestens eine thermoresponsive Polymer (A) bilden die disperse Phase, auch innere Phase genannt.

Das mindestens eine Tonmineral (C) und das mindestens eine thermoresponsive Polymer (A) können voneinander separiert in der zweiten Dispersion vorliegen. Ebenso ist es möglich und erfindungsgemäß bevorzugt, dass das mindestens eine Tonmineral (C) und das mindestens eine thermoresponsive Polymer (A) als Gemisch in der zweiten Dispersion vorliegt.

Liegt das mindestens eine Tonmineral (C) und das mindestens eine thermoresponsive Polymer (A) als Gemisch vor, so ist es bevorzugt, dass das mindestens eine thermoresponsive Polymer (A) an die Oberfläche des mindestens einen Tonminerals aufgebracht ist und/oder dass das mindestens eine Tonmineral (C) an die Oberfläche des mindestens einen thermoresponsiven Polymers (A) aufgebracht ist.

Es ist erfindungsgemäß außerdem bevorzugt, dass das mindestens eine Tonmineral (C) während der Polymerisation in Schritt a2) in gequollenem Zustand vorliegt.

Gegenstand der vorliegenden Erfindung ist daher auch ein erfindungsgemäßes Verfahren, bei dem das mindestens eine Tonmineral (C) während der Polymerisation in Schritt a2) im gequollenen Zustand vorliegt.

In Schritt a3) wird die in Schritt a2) erhaltene zweite Dispersion unter Erhalt der Mischung (M) getrocknet.

Die in Schritt a2) erhaltene zweite Dispersion kann nach allen dem Fachmann bekannten Methoden getrocknet werden. Beispielsweise mittels Sprühtrocknung, Zentrifugation, Trocknen bei Raumtemperatur, im Vakuum oder bei erhöhten Temperaturen. Selbstverständlich sind auch Kombinationen möglich. Bevorzugt wird die in Schritt a2) erhaltene Dispersion durch Sprühtrocknung getrocknet.

Gegenstand der vorliegenden Erfindung ist daher auch ein erfindungsgemäßes Verfahren, bei dem in Schritt a3) die zweite Dispersion mittels Sprühtrocknung getrocknet wird unter Erhalt der Mischung (M).

Es ist daher bevorzugt, dass die Bereitstellung der Mischung (M) in Schritt a) eine Sprühtrocknung des mindestens einen thermoresponsiven Polymers (A) in Gegenwart des mindestens einen Tonminerals (C) umfasst.

Gegenstand der vorliegenden Erfindung ist daher auch ein erfindungsgemäßes Verfahren, bei dem die Bereitstellung der Mischung (M) in Schritt a) eine Sprühtrocknung des mindestens einen thermoresponsiven Polymers (A) in Gegenwart des mindestens einen Tonminerals (C) umfasst.

Verfahren zur Sprühtrocknung sind dem Fachmann als solche bekannt.

In Schritt b) wird der mindestens eine organische Schaumstoff (B) in Gegenwart der in Schritt a) bereitgestellten Mischung (M) hergestellt.

Zur Herstellung des mindestens einen organischen Schaumstoffs (B) eignen sich alle dem Fachmann bekannten Methoden zur Herstellung des organischen Schaumstoffs (B).

Beispielsweise kann der organische Schaumstoff hergestellt werden, indem eine Schmelze des im organischen Schaumstoff enthaltenen Polymers bereitgestellt wird, die dann geschäumt wird. Zum Schäumen eignen sich alle dem Fachmann bekannten Methoden.

Ebenso ist es möglich, dass einzelne Komponenten des in dem mindestens einen organischen Schaumstoff enthaltenen Polymers miteinander gemischt und umgesetzt werden und so der organische Schaumstoff hergestellt wird.

Die in Schritt a) bereitgestellte Mischung (M) wird vorzugsweise in der Schmelze oder in zumindest einer der einzelnen Komponenten dispergiert. In der anschließenden Polymerisation wird dann das Kompositmaterial, das die Mischung (M), und somit die Komponenten (A) und (C), dispergiert in dem mindestens einen organischen Schaumstoff (B) enthält, erhalten.

Erfindungsgemäß ist die Komponente (B) ein Polyurethanschaumstoff. Verfahren zur Herstellung von Polyurethanschaumstoffen sind dem Fachmann bekannt. Bevorzugt erfolgt die Herstellung von Polyurethanschaumstoffen durch Reaktion einer Mischung, die gegenüber Isocyanaten reaktive Verbindungen enthält, mit einem Isocyanat. Die Mischung, die gegenüber Isocyanaten reaktive Verbindungen enthält, ist vorzugsweise eine Polyol-Mischung. Die Reaktion kann in Anwesenheit eines chemischen oder physikalischen Treibmittels erfolgen. Ein bevorzugtes Treibmittel ist Wasser. Die Reaktion zur Herstellung von Polyurethanschaumstoffen ist beispielsweise in Becker/Braun, Kunststoffhandbuch Band 7, Polyurethane, Carl Hanser Verlag München-Wien 1993*,* beschrieben.

### Verwendung des Kompositmaterials

Das erfindungsgemäße Kompositmaterial kann insbesondere in Bereichen verwendet werden, in denen eine externe oder interne Kühlung notwendig ist. Vorzugsweise wird das erfindungsgemäße Kompositmaterial für die Kühlung von Gebäuden eingesetzt. Hierbei kann das erfindungsgemäße Kompositmaterial auf die Aussenwände aufgebracht oder in Fassaden eingearbeitet sein um die Aussenwände von Gebäuden zu kühlen. Eine weitere Anwendungsmöglichkeit findet sich im Inneren von Gebäuden: hier kann das Kompositmaterial zur Kühlung und zum Feuchtemanagement von Innenräumen eingesetzt werden. Eine weitere Anwendungsmöglichkeit betrifft die Kühlung von elektrischen Aggregaten, von Batterien oder Akkumulatoren, und/oder zur Wärmeregulierung bei Sitzmöbeln, in Fahrzeugen, in Schuhen und in Bekleidung.

Das erfindungsgemäße Kompositmaterial wird bevorzugt also zur Kühlung von Gebäuden, von elektrischen Aggregaten, von Batterien oder Akkumulatoren, von Außenfassaden von Gebäuden, von Innenräumen und zur Wärmeregulierung bei Sitzmöbeln, in Fahrzeugen, in Schuhen und in Bekleidung verwendet.

Gegenstand der vorliegenden Erfindung ist daher auch die Verwendung des erfindungsgemäßen Kompositmaterials zur Kühlung von Gebäuden, von elektrischen Aggregaten, von Batterien oder Akkumulatoren, von Außenfassaden von Gebäuden, von Innenräumen und zur Wärmeregulierung bei Sitzmöbeln, in Fahrzeugen, in Schuhen und in Bekleidung.

Es besteht die Vorstellung, dass die erfindungsgemäßen Kompositmaterialien unterhalb der unteren kritischen Lösungstemperatur (LCST) der Komponente (A), Wasser aufnehmen. Beispielsweise nehmen die erfindungsgemäßen Kompositmaterialien so viel Wasser auf, dass das Gewichtsverhältnis des aufgenommenen Wassers zum Kompositmaterial im Bereich von 5 zu 100 bis 300 zu 100, bevorzugt im Bereich von 10 zu 100 bis 200 zu 100 und insbesondere bevorzugt im Bereich von 20 zu 100 bis 100 zu 100 liegt.

Das Wasser, das von dem Kompositmaterial aufgenommen wird, kann beispielsweise aus der Umgebung aufgenommen werden, üblicherweise als Niederschlag oder als Luftfeuchtigkeit. Ebenso ist es möglich, das Kompositmaterial gezielt mit Wasser zu befeuchten. Bevorzugt nimmt das Kompositmaterial das Wasser aus der Umgebung auf.

Wenn die Temperatur auf die untere kritische Lösungstemperatur (LCST) der Komponente (A) oder darüber steigt, so gibt das Kompositmaterial das Wasser ab, das sich durch Kapillarkräfte gleichmäßig im organischen Schaumstoff des Kompositmaterials verteilt und durch die erhöhte Oberfläche eine optimale Verdampfung des Wassers ermöglicht. Durch die dafür benötigte Verdampfungswärme kühlt das Kompositmaterial ab.

Nachfolgend wird die vorliegende Erfindung anhand von Beispielen näher erläutert, ohne sie hierauf zu beschränken.

### Beispiele

### Herstellung einer Mischung (M) aus den Komponenten (A) und (C)

### Es wurden die folgenden Komponenten eingesetzt:

### Monomere:

N-Isopropylacrylamid (NiPAAm) von Wako Chemicals und von TCI Chemicals
N,N'-Methylenbisacrylamid (BIS) von AppliChem und Merck KGaA
[3-(Methacryloylamino)propyl]trimethylammoniumchlorid-Lösung (MAPTAC; 50 Gew.-% in Wasser) von ABCR GmbH

### Tonmineral:

### Natriumbentonit: EXM757 von Süd-Chemie

### Initiatoren:

N,N,N',N'-Tetramethylethylendiamin (TEMEDA) von ABCR GmbH
Kaliumperoxodisulfat (KPS) von Sigma-Aldrich
Ammoniumperoxodisulfat (APS) von Grüssing GmbH Analytica
Natriumbentonit (162 g, 113 mmol Natrium) wurde in deionisiertem Wasser (2 l) gequollen. Anschließend wurde weiteres deionisiertes Wasser zugegeben, sodass die Dispersion insgesamt ein Volumen von 12 Litern hatte. NiPAAM (1000 g, 8840 mmol), BIS (50 g, 324 mmol, 5 Gew.-% bezogen auf NiPAAM) und MAPTAC (50 g einer 50 gew-%igen Lösung in Wasser, 113 mmol, 5 Gew.-% bezogen auf NiPAAM) wurden zu der Dispersion gegeben unter Erhalt der ersten Dispersion. Nach dem Entgasen mit Stickstoff wurde die erste Dispersion auf 80 °C erwärmt und KPS (20g, 74 mmol, 2 Gew.-% bezogen auf NiPAAM) zugegeben, um die Polymerisation der Monomere zu initiieren. Die Polymerisation wurde bei 80 °C für 6 Stunden durchgeführt. Nach dem Abkühlen wurden 5 Liter deionisiertes Wasser zugegeben, um die Viskosität der erhaltenen zweiten Dispersion zu reduzieren. Die in der zweiten Dispersion enthaltenen Partikel der Mischung (M) hatten einen Durchmesser im Bereich von 1 bis 2 mm. Der Wasseranteil der zweiten Dispersion lag bei 90 Gew.-%, bezogen auf das Gesamtgewicht der zweiten Dispersion.

Anschließend wurde die zweite Dispersion nach verschiedenen Verfahren getrocknet.

### a) Sprühtrocknung der zweiten Dispersion

Zur Sprühtrocknung wurde ein Nubilosa^{®} LTC-ME-Laborsprühtrockner verwendet. Die Eingangstemperatur wurde auf 165 °C gesetzt, die Ausgangstemperatur wurde durch die injizierte zweite Dispersion auf 85 bis 90 °C geregelt. Die zweite Dispersion wurde durch eine Zweikomponentendüse (Durchmesser 2 mm) mit Pressluft (5 bar) zerstäubt. Die Restfeuchte der erhaltenen Mischung (M) lag bei 3 Gew.-%. Die mittels Sprühtrocknung erhaltene Mischung (M) wird nachfolgend als (M-S) bezeichnet.

### b) Zentrifugation und anschließende Trocknung bei Raumtemperatur

Die erhaltene zweite Dispersion wurde in einer CEPA LS Laborzentrifuge mit einem Polyamid-Filterbeutel mit 4 200 rpm zentrifugiert. Anschließend wurde die erhaltene Mischung für 5 Tage bei Raumtemperatur getrocknet und schließlich gemahlen. Die Restfeuchte der erhaltenen Mischung (M) lag bei 6 Gew.-%. Die mittels Zentrifugation und anschließender Trocknung bei Raumtemperatur erhaltene Mischung (M) wird nachfolgend als (M-Z) bezeichnet.

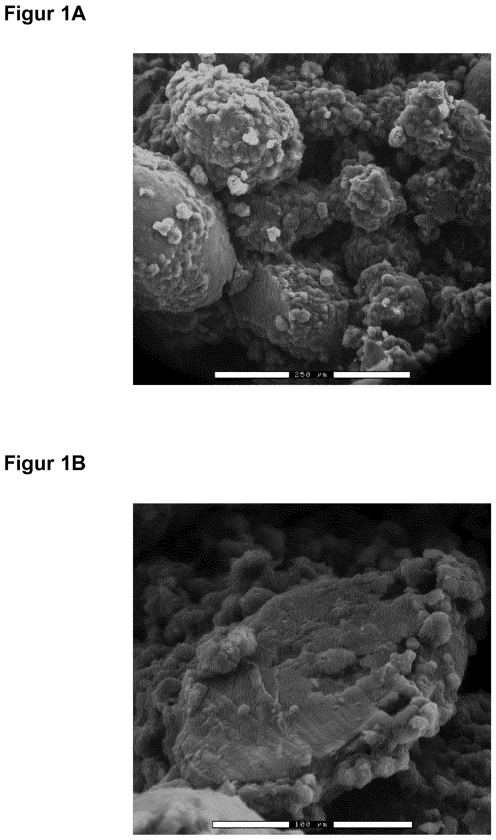

Zur Bestimmung der Morphologie der in M-S und M-Z enthaltenen Partikel wurden die Partikel mittels Environmental Scanning Electron Microscopy (ESEM 2020 der Firma ElectroScan), ausgestattet mit einem GSED-Detektor (gaseous secondary electron detector) analysiert. Die Ergebnisse sind in den Figuren 1a und 1b für (M-S) und 2a und 2b für (M-Z) gezeigt.

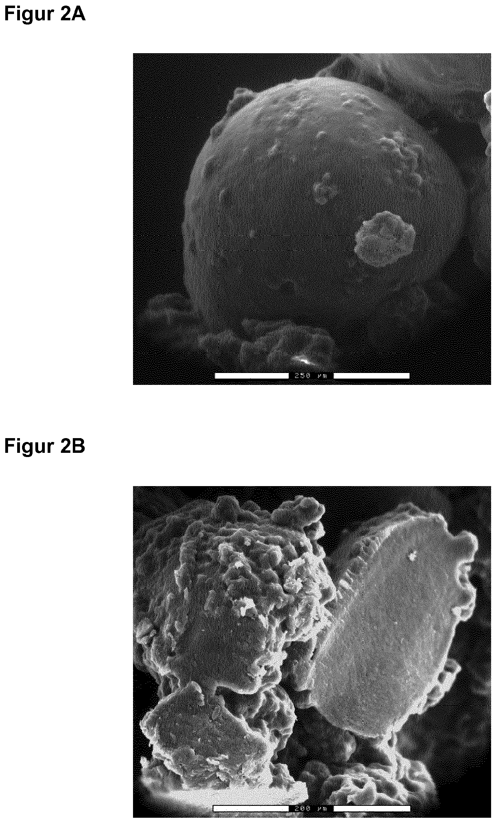

Es ist zu erkennen, dass durch die Sprühtrocknung (Figuren 1a und 1b) deutlich kleinere Partikel mit einem Durchmesser von ca. 100 µm erhalten werden, im Vergleich zu zentrifugierten und anschließend getrockneten Partikeln, deren Durchmesser bei ca. 300 µm liegt (Figuren 2a und 2b). Die Partikel des Tonminerals sind an der Oberfläche des thermoresponsiven Polymers angeordnet.

### Herstellung des organischen Schaumstoffs und des Kompositmaterials

Zur Herstellung des organischen Schaumstoffs und des Kompositmaterials wurden die folgenden Komponenten eingesetzt.

### Polyole:

| | |
|---|---|
| P1 | Mischung von 95 Gew.-Teilen Polyetherol P1a (erhalten aus der Propoxylierung von Glyzerin und anschließender Ethoxylierung (OH-Zahl = 28 mg KOH/g, 15 % EO-Gehalt)) und 5 Gew.-Teilen Polyetherol P1b (erhalten aus der Propoxylierung von Glyzerin und anschließender Ethoxylierung (OH-Zahl = 42 mg KOH/g, 70 % EO-Gehalt)). |
| P2 | Mischung von 42,5 Gew.-Teilen Polyetherol P2a (erhalten aus der Propoxylierung von Glycerol und anschließender Ethoxylierung (OH-Zahl = 35 mg KOH/g), 57 Gew.-Teilen Polyetherol P2b (erhalten aus der Propoxylierung von Glyzerin und anschließender Ethoxylierung (OH-Zahl = 27 mg KOH/g) und 0,5 Gew. Teilen Triethanolamin. |
| P3 | Mischung von 66,5 Gew.-Teilen Polyetherol P3a (erhalten aus der Propoxylierung von Saccharose und Glyzerin (OH-Zahl = 490 mg KOH/g)) und 33,5 Gew.-Teilen Polyetherol P3b (erhalten aus der Ethoxylierung von Trimethylolpropan (OH-Zahl = 600 mg KOH/g)). |
| P4 | Mischung aus 61 Gew.-Teilen Polyetherol P4a (erhalten aus der Propoxylierung von Saccharose und Glyzerin (OH-Zahl = 450 mg KOH/g)), 25,5 Gew.-Teilen Polyetherol P4b (erhalten aus der Ethoxylierung/Propoxylierung von vicinalem Toluoldiamin)) und 13,5 Gew.-Teilen Polyetherol P4c (erhalten aus der Propoxylierung von Trimethylolpropan (OH-Zahl = 160 mg KOH/g). |

### Katalysatoren:

K1: Diazabicyclo[2.2.2]octan (DABCO)
K2: N,N-Dimethylcyclohexan

### Stabilisator:

### Silicontensid DABCO^{®} DC 193, Air Products

### Treibmittel:

### Wasser und Cyclopentan (Merck KGaA)

### Superabsorber (SAP):

### Luquasorb^{®} 1010 der BASF SE, Polyacrylat, vernetzt

### Isocyanat:

| | |
|---|---|
| Iso 1: | Mischung aus 2,4'-Methylendiphenylisocyanat (2,4'-MDI), 4,4'-Methylendiphenylisocyanat (4,4'-MDI) und Polymer-MDI (polymeren Methylendiphenylisocyanat), NCO-Gehalt: 33 % |
| Iso 2: | Uretonimin-modifiziertes Isocyanat-Prepolymer auf Basis von Methylendiphenylisocyanat (MDI), NCO-Gehalt = 28 Gew.% |
| Iso 3: | Polymer-MDI (polymeres Methylendiphenylisocyanat) (Lupranat M 20 W, BASF SE), NCO-Gehalt = 32 Gew.% |

### Mischung (M):

### M-S (sprühgetrocknet)

Zur Herstellung des organischen Schaumstoffs wurden das Polyol, der Katalysator, der Stabilisator und das Treibmittel in den in Tabelle 1 angegebenen Mengen in einem Einwegbehälter unter gutem Rühren vorgemischt, anschließend das Isocyanat zugegeben und die Mischung durch kräftiges Rühren innerhalb von 5 Sekunden homogenisiert. Anschließend wurde Reaktionsmischung sofort in eine Metallform mit einer Dimension von 40 x 40 x 40 cm überführt, in der sie aufschäumte und aushärtete.

Die so erhaltenen Würfel des organischen Schaumstoffs wurden dann in Scheiben von 2 cm Dicke geschnitten und für die Tests zur passiven Kühlung eingesetzt.

Zur Herstellung eines Kompositmaterials, das zusätzlich zu dem organischen Schaumstoff die Mischung (M) oder den Superabsorber (SAP) enthält, wurde der organische Schaumstoff wie vorstehend beschrieben hergestellt, allerdings wurde die Mischung (M) bzw. der Superaborber (SAP) zunächst gemeinsam mit dem Polyol, Katalysator, Stabilisator und Treibmittel dispergiert bevor das Isocyanat zugegeben wurde.

Die Startzeit, die Gelierungszeit und die Steigzeit sowie die Dichte der erhaltenen organischen Schaumstoffe und Kompositmaterialien sind in Tabelle 1 angegeben.

Die Startzeit ist der Zeitraum vom Beginn der Vermischung des Polyols, des Katalysators, des Stabilisators, des Treibmittels und des Isocyanats bis zu einer optisch wahrnehmbaren Veränderung oder eines deutlichen Anstiegs der Viskosität des Reaktionsgemisches.

Die Gelierungszeit ist die Zeitspanne vom Beginn der Vermischung des Polyols, des Katalysators, des Stabilisators, des Treibmittels und des Isocyanats bis zu dem Zustand, bei dem das Produktgemisch nicht mehr fließfähig ist. Sie wird ermittelt durch Berührung eines Holzstäbchens mit dem noch steigenden Schaum und entspricht dem Zeitpunkt, an dem das erste Mal Fäden beim Herausziehen des Holzstäbchens beobachtet werden können.

Die Steigzeit ist der Zeitraum von Beginn der Vermischung des Polyols, des Katalysators, des Stabilisators, des Treibmittels und des Isocyanats bis zum Ende des Steigvorganges.

Es ist zu erkennen, dass durch den Superabsorber insbesondere die Start- und die Gelierungszeit sowie die Dichte der enthaltenen Kompositmaterialien signifikant erhöht werden gegenüber reinen organischen Schaumstoffen. Die Mischung (M) zeigt nahezu keinen Einfluss auf die Start- und die Gelierungszeit sowie die Dichte.

Die organischen Schaumstoffe und Kompositmaterialien der Beispiele V1, B2, B3, B4, V5 und V6 sind Weichschaumstoffe (offenzellig), die organischen Schaumstoffe und Kompositmaterialien der Beispiele V7, B8 und B9 sind Halbhartschaumstoffe, die organischen Schaumstoffe und Kompositmaterialien der Beispiele V10, B11 und B12 sind wassergeschäumte Hartschaumstoffe (geschlossenzellig) und die organischen Schaumstoffe und Kompositmaterialien der Beispiele V13, B14, B15, B16, V17 und V18 sind mit Wasser / Cyclopentan geschäumte Hartschaumstoffe (geschlossenzellig).

| Tabe lle 1 | **P1 [Gew. -teile]** | **P2 [Gew. -teile]** | **P3 [Gew. -teile]** | **P4 [Gew. -teile]** | **K1 [Gew.-teile]** | **K2 [Gew.-teile]** | **Stabilisator [Gew.-teile]** | **Wasser [Gew.-teile]** | **Cyclopentan [Gew.-teile]** | **(M-S) [Gew.-teile]** | **SAP [Gew.-teile]** | **Iso 1 [Gew. -teile]** | **Iso 2 [Gew. -teile]** | **Iso 3 [Gew. -teile]** | **Startzeit [5]** | **Gelierungszeit [s]** | **Steigzeit [5]** | **Dichte [g/l]** |
|---|---|---|---|---|---|---|---|---|---|---|---|---|---|---|---|---|---|---|
| **V1** | 96,2 | - | - | - | 0,5 | - | 0,3 | 3 | - | - | - | 46 | - | - | 16 | 119 | 180 | 52 |
| **B2** | 96,2 | - | - | - | 0,5 | - | 0,3 | 3 | - | 3 | - | 46 | - | - | 16 | 119 | 180 | 51 |
| **B3** | 96,2 | - | - | - | 0,5 | - | 0,3 | 3 | - | 14 | - | 46 | - | - | 17 | 119 | 180 | 52 |
| **B4** | 96,2 | - | - | - | 0,5 | - | 0,3 | 3 | - | 25 | - | 46 | - | - | 18 | 119 | 180 | 54 |
| **V5** | 96,2 | - | - | - | 0,5 | - | 0,3 | 3 | - | - | 1,5 | 46 | - | - | 22 | 200 | 280 | 84 |
| **V6** | 96,2 | - | - | - | 0,5 | - | 0,3 | 3 | - | - | 4,8 | 46 | - | - | 32 | 220 | 290 | 95 |
| **V7** | - | 95 | - | - | 0,8 | - | 1,3 | 2,9 | - | - | - | - | 62 | - | 12 | 56 | 61 | 49 |
| **B8** | - | 95 | - | - | 0,8 | - | 1,3 | 2,9 | - | 14 | - | - | 62 | - | 12 | 56 | 83 | 56 |
| **B9** | - | 95 | - | - | 0,8 | - | 1,3 | 2,9 | - | 25 | - | - | 62 | - | 14 | 57 | 91 | 60 |
| **V10** | - | - | 95,9 | - | 0,1 | 0,5 | 1 | 2,5 | - | - | - | - | - | 140 | 24 | 71 | 90 | 50 |
| **B11** | - | - | 95,9 | - | 0,1 | 0,5 | 1 | 2,5 | - | 7 | - | - | - | 140 | 24 | 70 | 91 | 51 |
| **B12** | - | - | 95,9 | - | 0,1 | 0,5 | 1 | 2,5 | - | 14 | - | - | - | 140 | 26 | 73 | 93 | 51 |
| **V13** | - | - | - | 92,4 | 1,4 | 0,7 | 3 | 2,5 | 13 | - | - | - | - | 134 | 8 | 47 | 78 | 27 |
| **B14** | - | - | - | 92,4 | 1,4 | 0,7 | 3 | 2,5 | 13 | 3 | - | - | - | 134 | 8 | 47 | 79 | 26 |
| **B15** | - | - | - | 92,4 | 1,4 | 0,7 | 3 | 2,5 | 13 | 14 | - | - | - | 134 | 9 | 49 | 80 | 29 |
| **B16** | - | - | - | 92,4 | 1,4 | 0,7 | 3 | 2,5 | 13 | 25,6 | - | - | - | 134 | 9 | 50 | 78 | 29 |
| **V17** | - | - | - | 92,4 | 1,4 | 0,7 | 3 | 2,5 | 13 | - | 3 | - | - | 134 | 19 | 200 | 288 | 63 |
| **V18** | - | - | - | 92,4 | 1,4 | 0,7 | 3 | 2,5 | 13 | - | 25,5 | - | - | 134 | 35 | 250 | 340 | 122 |

### Wasseraufnahme der Kompositmaterialien

Jeweils vier quaderförmige Blöcke von 6 x 6 x 2 cm Kantenlänge der verschiedenen organischen Schaumstoffe und der Kompositmaterialien (Probekörper) wurden zunächst gewogen, dann in deionisiertes Wasser gegeben und nach 1 Stunde und nochmals nach 91 Stunden herausgenommen. Die Wasseraufnahme, bestimmt als Mittelwert aus vier Messungen, entsprach dabei der Gewichtszunahme nach Abtropfen der Probekörper abzüglich des ursprünglichen Trockengewichts der Probe. Der Wassergehalt der Probekörper wurde dann bezogen auf das Gesamtgewicht der Probe in Gew. % berechnet.

### Der Wassergehalt der verschiedenen Probekörper ist in Tabelle 2 angegeben.

**Tabelle 2**

| | Wassergehalt nach 1 h [Gew.%] | Wassergehalt nach 91 h [Gew.%] |
|---|---|---|
| V1 | 77 | 87 |
| B2 | 68 | 94 |
| B3 | 69 | 94 |
| B4 | 69 | 92 |
| V5 | 76 | 90 |
| V6 | 80 | 91 |
| V7 | 68 | 86 |
| B8 | 73 | 93 |
| B9 | 70 | 91 |
| V10 | 20 | 36 |
| B11 | 34 | 48 |
| B12 | 70 | 82 |
| V13 | 34 | 51 |
| B14 | 32 | 60 |
| B15 | 43 | 70 |
| B16 | 55 | 74 |
| V17 | 44 | 61 |
| V18 | 70 | 90 |

Es ist zu erkennen, dass Hartschaumstoffe die geringste Wasseraufnahme zeigen, während die Weichschaumstoffe den höchsten Wassergehalt aufweisen. Dies ist auf die Offenzelligkeit der Weichschaumstoffe zurückzuführen.

Anhand des Wassergehalts nach 1 Stunde und nach 91 Stunden ist zu erkennen, dass die erfindungsgemäßen Kompositmaterialien zwar langsamer Wasser aufnehmen als der reine organische Schaumstoff sowie die Kompositmaterialien, die einen Superabsorber enthalten, nach 91 Stunden aber den mindestens gleichen oder aber höheren Wasseranteil aufweisen als die Vergleichsmaterialien. Ausnahme bildet der Vergleichversuch V18. Der hohe Gehalt an Superabsorber im Material sorgt für eine ebenfalls hohe Wasseraufnahme und damit einen hohen Wassergehalt, allerdings weist der Schaum eine sehr grobe und heterogene Schaumstruktur sowie eine hohe Dichte auf. Die daraus resultierenden Nachteile in der Mechanik und in den Isolationseigenschaften machen ihn für eine spätere Anwendung als Verbundmaterial unattraktiv.

### Passive Kühlung

Zur Bestimmung des passiven Kühlungsverhaltens der hergestellten Kompositmaterialien im Vergleich zu reinen organischen Schaumstoffen, wurden Probekörper der Materialien mit einer Dimension von 6 x 6 x 2 cm in einem Winkel von 40° und mit einem Abstand von 35 cm zu einer Infrarotlampe (500 W Halogen) platziert. Über die Probekörper wurde ein konstanter Luftstrom mit einer Strömungsgeschwindigkeit von 0,1 m/s geleitet. Zur Bestimmung des Temperaturprofils auf der Oberfläche der Materialien wurde eine Infrarotkamera eingesetzt.

Um die Änderung des Wassergehaltes zu bestimmen, wurden die Probekörper des Kompositmaterials und der Vergleichsmaterialien auf eine Waage gelegt und das Gewicht der Probekörper in Abhängigkeit von der Zeit bestimmt.

Um den Kühleffekt des Kompositmaterials und der Vergleichsmaterialien zu bestimmen, wurde ein Probekörper des Kompositmaterials oder des Vergleichsmaterials auf eine Platte eines reinen organischen Schaumstoffs gelegt und zwischen die Platte des organischen Schaumstoffs und des Kompositmaterials oder des Vergleichsmaterials ein Thermoelement eingeführt, das die Temperatur auf der Rückseite der zu testenden Probekörper bestimmte.

### a) Oberflächentemperatur und Wassergehalt

Die Oberflächentemperaturen sowie der Wassergehalt des Kompositmaterials gemäß Beispiel B3 und des Vergleichsmaterials gemäß Beispiel V1 wurde über einen Zeitraum von 360 Minuten bestimmt. Der initiale Wassergehalt der Proben (94 Gew% für B3 bzw. 87 Gew.% für V1, siehe Tabelle 2) wurde dabei auf 100% gesetzt und die prozentuale Gewichtsabnahme beider Proben über die Zeit verfolgt.

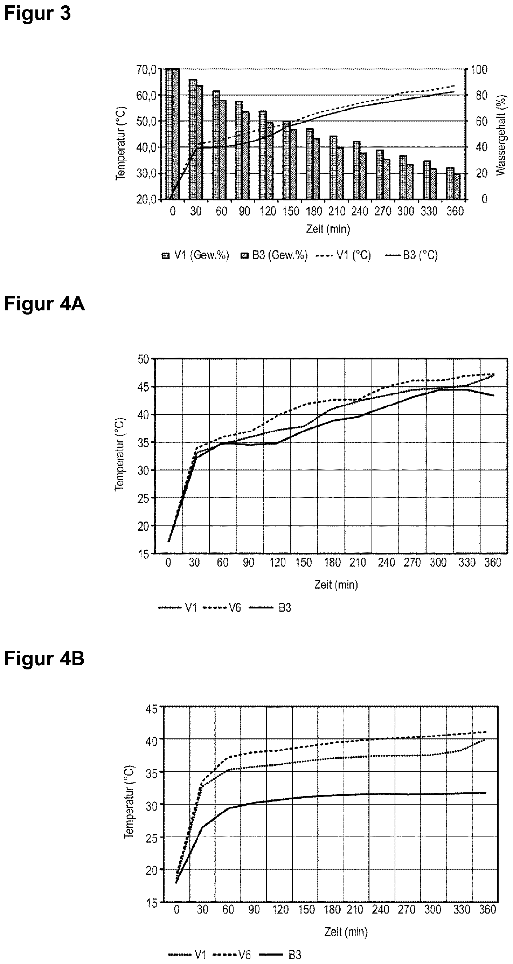

Figur 3 zeigt die Ergebnisse dieses Tests.

Es ist zu erkennen, dass zu Beginn der Messung die Verdampfung des Wassers in beiden Beispielen B3 und V1 identisch ist. Nach etwa 30 Minuten wird aus dem Kompositmaterial gemäß Beispiel B3 bereits mehr Wasser verdampft. Über die gesamte Meßzeit verdampft aus dem Material gemäß Beispiel B3 mehr Wasser als aus dem Vergleichsmaterial V1, so dass bei B3 ein geringerer Wassergehalt übrig Eigenschaftebleibt. Gleichzeitig zeigt das erfindungsgemäße Kompositmaterial B3 bedingt durch die höhere Abdampfrate eine niedrigere Oberflächentemperatur und damit einen größeren kühlenden Effekt.

### b) Zweischichtmessungen

Für die Messungen an Weichschaumstoffen wurden als Vergleichsmaterial der organische Schaumstoff gemäß Vergleichsbeispiel V1 eingesetzt, das Kompositmaterial gemäß Beispiel B3 sowie das Kompositmaterial gemäß Vergleichsbeispiel V6. Als Platte des organischen Schaumstoffs, auf den das Kompositmaterial und die Vergleichsmaterialien V1 und V6 gelegt wurden, wurde ein organischer Schaumstoff gemäß Vergleichsbeispiel V1 verwendet.

Für die Messung an Hartschaumstoffen wurden als Kompositmaterial der organische Schaumstoff gemäß Vergleichsbeispiel V13 eingesetzt, das Kompositmaterial gemäß Beispiel B16 sowie das Kompositmaterial gemäß Vergleichsbeispiel V18. Als Platte des organischen Schaumstoffs, auf den das Kompositmaterial gelegt wurde, wurde der organische Schaumstoff gemäß Vergleichsbeispiel V13 eingesetzt.

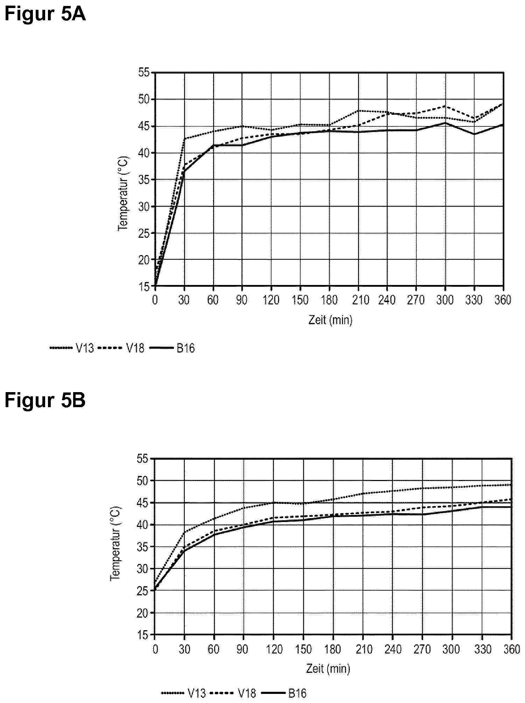

Die Ergebnisse für die Weichschaumstoffe sind in Figur 4a und 4b angegeben, die für die Hartschaumstoffe in Figur 5a und 5b.

Die Figuren 4a und 5a zeigen jeweils die Oberflächentemperatur über den Messzeitraum, die Figuren 4b und 5b zeigen jeweils die Rückseitentemperaturen.

Anhand der Figuren 4b und 5b ist zu erkennen, dass die Rückseitentemperatur des erfindungsgemäßen Kompositmaterials jeweils geringer ist als die der Vergleichsbeispiele. Mit dem erfindungsgemäßen Kompositmaterial wird daher ein höherer Kühlungseffekt erzielt als mit den Materialien der Vergleichsbeispiele.

## Patentansprüche

1. Kompositmaterial, das die Komponenten
(A) mindestens ein thermoresponsives Polymer und
(B) mindestens einen organischen Schaumstoff enthält, wobei die Komponente (A) eine untere kritische Lösungstemperatur (LCST) aufweist, wobei die untere kritische Lösungstemperatur (LCST) im Bereich von 5 bis 70 °C liegt, und wobei die Komponente (B) ausgewählt ist aus Polyurethanschaumstoffen, **dadurch gekennzeichnet, dass** das Kompositmaterial zusätzlich eine Komponente
(C) mindestens ein Tonmineral enthält,
wobei die Komponente (C) mindestens ein schichtartig aufgebautes Silikat ist und wobei die untere kritische Lösungstemperatur (LCST) die Temperatur ist, bei der die Komponente (A) und Wasser eine Mischungslücke aufweisen, bestimmt mittels dynamischer Differenzkalorimetrie (DSC) oder mittels Trübungsmessung, zur Kühlung von Gebäuden, von elektrischen Aggregaten, von Batterien oder Akkumulatoren, von Außenfassaden von Gebäuden, von Innenräumen und zur Wärmeregulierung bei Sitzmöbeln, in Fahrzeugen, in Schuhen und in Bekleidung.

2. Kompositmaterial gemäß Anspruch 1, **dadurch gekennzeichnet, dass** die Komponente (A) ausgewählt ist aus der Gruppe bestehend aus Poly(meth)acrylaten, Poly(meth)acrylamiden, Poly(meth)acryloylpyrrolidinen, Poly(meth)acryloylpiperidinen, Poly-N-Vinylamiden, Polyoxazolinen, Polyvinyloxazolidonen, Polyvinylcaprolactonen, Polyvinylcaprolactamen, Polyethern, Hydroxypropylcellulosen, Polyvinylethern und Polyphosphoestern.

3. Kompositmaterial gemäß Anspruch 1 oder 2, **dadurch gekennzeichnet, dass** die Komponente (B) zu mindestens 50 % offenzellig ist.

4. Kompositmaterial gemäß einem der Ansprüche 1 bis 3, **dadurch gekennzeichnet, dass** die Komponente (C) ausgewählt ist aus der Gruppe bestehend aus Montmorilloniten und Kaoliniten.

5. Kompositmaterial gemäß einem der Ansprüche 1 bis 4, **dadurch gekennzeichnet, dass** das Kompositmaterial im Bereich von 0,5 bis 50 Gew.-% der Komponente (A), im Bereich von 25 bis 99,49 Gew.-% der Komponente (B) und im Bereich von 0,01 bis 50 Gew.-% der Komponente (C) enthält, jeweils bezogen auf die Summe der Gewichtsprozente der Komponenten (A), (B) und (C).

6. Verfahren zur Herstellung eines Kompositmaterials gemäß einem der Ansprüche 1 bis 5, umfassend die Schritte
a) Bereitstellung einer Mischung (M), die das mindestens eine thermoresponsive Polymer (A) enthält,
b) Herstellung des mindestens einen organischen Schaumstoffs (B) in Gegenwart der in Schritt a) bereitgestellten Mischung (M) unter Erhalt des Kompositmaterials,
**dadurch gekennzeichnet, dass** die in Schritt a) bereitgestellte Mischung (M) zusätzlich mindestens ein Tonmaterial (C) enthält.

7. Verfahren gemäß Anspruch 6, **dadurch gekennzeichnet, dass** die Bereitstellung der Mischung (M) in Schritt a) eine Polymerisation mindestens eines Monomers, ausgewählt aus der Gruppe bestehend aus (Meth)acrylaten, (Meth)acrylamiden, (Meth)acryloylpyrrolidinen, (Meth)acryloylpiperidinen, N-vinylamiden, Oxazolinen, Vinyloxazolidonen, Vinylcaprolactonen, Vinylcaprolactamen, Alkylenoxiden, Vinylethern und Phosphoestern, wobei das mindestens eine thermoresponsive Polymer (A) erhalten wird, umfasst.

8. Verfahren gemäß Anspruch 6 oder 7, **dadurch gekennzeichnet, dass** die Bereitstellung der Mischung (M) in Schritt a) die folgenden Schritte umfasst:
a1) Bereitstellen einer ersten Dispersion, die das mindestens eine Tonmineral (C), ein Dispersionsmittel, ausgewählt aus der Gruppe bestehend aus Wasser und einem organischen Lösungsmittel, mindestens ein Monomer ausgewählt aus der Gruppe bestehend aus (Meth)acrylaten, (Meth)acrylamiden, (Meth)acryloylpyrrolidinen, (Meth)acryloylpiperidinen, N-Vinylamiden, Oxazolinen, Vinyloxazolidonen, Vinylcaprolactonen, Vinylcaprolactamen, Alkylenoxiden, Vinylethern und Phosphoestern, enthält,
a2) Polymerisation des in der in Schritt a1) bereitgestellten ersten Dispersion enthaltenen mindestens einen Monomers in der ersten Dispersion, wobei das mindestens eine thermoresponsive Polymer (A) erhalten wird, unter Erhalt einer zweiten Dispersion, die das mindestens eine Tonmineral (C), das Dispersionsmittel und das mindestens eine thermoresponsive Polymer (A) enthält,
a3) Trocknen der in Schritt a2) erhaltenen zweiten Dispersion unter Erhalt der Mischung (M).

9. Verfahren gemäß Anspruch 8, **dadurch gekennzeichnet, dass** das mindestens eine Tonmineral (C) während der Polymerisation in Schritt a2) im gequollenen Zustand vorliegt.

10. Verfahren gemäß einem der Ansprüche 6 bis 9, **dadurch gekennzeichnet, dass** die Bereitstellung der Mischung (M) in Schritt a) eine Sprühtrocknung des mindestens einen thermoresponsiven Polymers (A) in Gegenwart des mindestens einen Tonminerals (C) umfasst.

11. Verfahren gemäß einem der Ansprüche 6 bis 10, **dadurch gekennzeichnet, dass** die im Schritt a) bereitgestellte Mischung (M) das mindestens eine thermoresponsive Polymer (A) in Form von Partikeln enthält und das mindestens eine Tonmineral (C) in Form von Partikeln enthält, wobei die Partikel des mindestens einen thermoresponsiven Polymers (A) einen D50-Wert im Bereich von 200 nm bis 5 mm aufweisen und die Partikel des mindestens einen Tonminerals (C) einen D50-Wert im Bereich von 50 nm bis 3 mm aufweisen, bestimmt mittels Lichtstreuung und/oder Siebung.

12. Verwendung eines Kompositmaterials gemäß einem der Ansprüche 1 bis 5, zur Kühlung von Gebäuden, von elektrischen Aggregaten, von Batterien oder Akkumulatoren, von Außenfassaden von Gebäuden, von Innenräumen und zur Wärmeregulierung bei Sitzmöbeln, in Fahrzeugen, in Schuhen und in Bekleidung.

## Claims

1. A composite material which comprises the components
(A) at least one thermoresponsive polymer and
(B) at least one organic foam,
the component (A) having a lower critical solution temperature (LCST), the lower critical solution temperature (LCST) being in the range from 5 to 70°C, and the component (B) being selected from polyurethane foams, wherein the composite material further comprises a component
(C) at least one clay mineral,
the component (C) being at least one layered silicate and the lower critical solution temperature (LCST) being the temperature at which component (A) and water exhibit a miscibility gap, determined via dynamic scanning calorimetry (DSC) or via turbidity measurement, for cooling buildings, electrical assemblies, primary batteries or secondary batteries, exterior facades of buildings, interiors, and for regulating the heat in furniture for sitting, in vehicles, in footwear, and in apparel.

2. The composite material according to claim 1, wherein component (A) is selected from the group consisting of poly(meth)acrylates, poly(meth)acrylamides, poly(meth)acryloylpyrrolidines, poly(meth)acryloylpiperidines, poly-N-vinylamides, polyoxazolines, polyvinyloxazolidones, polyvinylcaprolactones, polyvinylcaprolactams, polyethers, hydroxypropylcelluloses, polyvinyl ethers, and polyphosphoesters.

3. The composite material according to claim 1 or 2, wherein component (B) is open-cell to an extent of at least 50%.

4. The composite material according to any of claims 1 to 3, wherein component (C) is selected from the group consisting of montmorillonites and kaolinites.

5. The composite material according to any of claims 1 to 4, wherein the composite material comprises in the range from 0.5 to 50 wt% of component (A), in the range from 25 to 99.49 wt% of component (B), and in the range from 0.01 to 50 wt% of component (C), based in each case on the sum of the weight percentages of components (A), (B) and (C).

6. A method for producing a composite material according to any of claims 1 to 5, comprising the steps of
a) providing a mixture (M) which comprises the at least one thermoresponsive polymer (A),
b) preparing the at least one organic foam (B) in the presence of the mixture (M) provided in step a) to give the composite material,
wherein the mixture (M) provided in step a) further comprises at least one clay material (C).

7. The method according to claim 6, wherein the providing of the mixture (M) in step a) comprises a polymerization of at least one monomer selected from the group consisting of (meth)acrylates, (meth)acrylamides, (meth)acryloylpyrrolidines, (meth)acryloylpiperidines, N-vinylamides, oxazolines, vinyloxazolidones, vinylcaprolactones, vinylcaprolactams, alkylene oxides, vinyl ethers and phosphoesters, to give the at least one thermoresponsive polymer (A).

8. The method according to claim 6 or 7, wherein the providing of the mixture (M) in step a) comprises the following steps:
a1) providing a first dispersion which comprises the at least one clay mineral (C), a dispersion medium selected from the group consisting of water and an organic solvent, and at least one monomer selected from the group consisting of (meth)acrylates, (meth)acrylamides, (meth)acryloylpyrrolidines, (meth)acryloylpiperidines, N-vinylamides, oxazolines, vinyloxazolidones, vinylcaprolactones, vinylcaprolactams, alkylene oxides, vinyl ethers and phosphoesters,
a2) polymerizing the at least one monomer present in the first dispersion provided in step a1), in the first dispersion, to give the at least one thermoresponsive polymer (A), to give a second dispersion which comprises the at least one clay mineral (C), the dispersion medium, and the at least one thermoresponsive polymer (A),
a3) drying the second dispersion obtained in step a2), to give the mixture (M).

9. The method according to claim 8, wherein the at least one clay mineral (C) is present in the swollen state during the polymerization in step a2).

10. The method according to any of claims 6 to 9, wherein the providing of the mixture (M) in step a) comprises a spray drying of the at least one thermoresponsive polymer (A) in the presence of the at least one clay mineral (C).

11. The method according to any of claims 6 to 10, wherein the mixture (M) provided in step a) comprises the at least one thermoresponsive polymer (A) in the form of particles and comprises the at least one clay mineral (C) in the form of particles, the particles of the at least one thermoresponsive polymer (A) having a D50 in the range from 200 nm to 5 mm, and the particles of the at least one clay mineral (C) having a D50 in the range from 50 nm to 3 mm, determined by light scattering and/or sieving.

12. The use of a composite material according to any of claims 1 to 5 for cooling buildings, electrical assemblies, primary batteries or secondary batteries, exterior facades of buildings, interiors, and for regulating the heat in furniture for sitting, in vehicles, in footwear, and in apparel.

## Revendications

1. Matériau composite, contenant les composants
(A) au moins un polymère thermoréactif ; et
(B) au moins une mousse organique,
le composant (A) présentant une température critique inférieure de dissolution (LCST), la température critique inférieure de dissolution (LCST) se situant dans la plage allant de 5 à 70 °C, et le composant (B) étant choisi parmi les mousses de polyuréthane, **caractérisé en ce que** le matériau composite contient en outre un composant
(C) au moins un minéral argileux,
le composant (C) étant au moins un silicate à structure de type stratifié et la température critique inférieure de dissolution (LCST) étant la température à laquelle le composant (A) et l'eau présentent une lacune de mélange, déterminée par calorimétrie différentielle dynamique (DSC) ou par mesure de turbidité, pour le refroidissement de bâtiments, de groupes électriques, de batteries ou d'accumulateurs, de façades extérieures de bâtiments, d'espaces intérieurs et pour la régulation thermique dans des sièges, dans des véhicules, dans des chaussures et dans des vêtements.

2. Matériau composite selon la revendication 1, **caractérisé en ce que** le composant (A) est choisi dans le groupe constitué par les poly(méth)acrylates, les poly(méth)acrylamides, les poly(méth)acryloylpyrrolidines, les poly(méth)acryloylpipéridines, les poly-N-vinylamides, les polyoxazolines, les polyvinyloxazolidones, les polyvinylcaprolactones, les polyvinylcaprolactames, les polyéthers, les hydroxypropylcelluloses, les polyvinyléthers et les polyphosphoesters.

3. Matériau composite selon la revendication 1 ou 2, **caractérisé en ce que** le composant (B) est à cellules ouvertes à au moins 50 %.

4. Matériau composite selon l'une quelconque des revendications 1 à 3, **caractérisé en ce que** le composant (C) est choisi dans le groupe constitué par les montmorillonites et les kaolinites.

5. Matériau composite selon l'une quelconque des revendications 1 à 4, **caractérisé en ce que** le matériau composite contient dans la plage allant de 0,5 à 50 % en poids du composant (A), dans la plage allant de 25 à 99,49 % en poids du composant (B) et dans la plage allant de 0,01 à 50 % en poids du composant (C), respectivement par rapport à la somme des pourcentages en poids des composants (A), (B) et (C).

6. Procédé de préparation d'un matériau composite selon l'une quelconque des revendications 1 à 5, comprenant les étapes suivantes :
a) la fourniture d'un mélange (M) contenant l'au moins un polymère thermoréactif (A),
b) la préparation de l'au moins une mousse organique (B) en présence du mélange (M) fourni à l'étape a) pour obtenir le matériau composite,
**caractérisé en ce que** le mélange (M) fourni à l'étape a) contient en outre au moins un matériau argileux (C).

7. Procédé selon la revendication 6, **caractérisé en ce que** la fourniture du mélange (M) à l'étape a) comprend une polymérisation d'au moins un monomère choisi dans le groupe constitué par les (méth)acrylates, les (méth)acrylamides, les (méth)acryloylpyrrolidines, les (méth)acryloylpipéridines, les N-vinylamides, les oxazolines, les vinyloxazolidones, les vinylcaprolactones, les vinylcaprolactames, les oxydes d'alkylène, les éthers de vinyle et les phosphoesters, l'au moins un polymère thermoréactif (A) étant obtenu.

8. Procédé selon la revendication 6 ou 7, **caractérisé en ce que** la fourniture du mélange (M) à l'étape a) comprend les étapes suivantes :
a1) la fourniture d'une première dispersion qui contient l'au moins un minéral argileux (C), un dispersant choisi dans le groupe constitué par l'eau et un solvant organique, au moins un monomère choisi dans le groupe constitué par les (méth)acrylates, les (méth)acrylamides, les (méth)acryloylpyrrolidines, les (méth)acryloylpipéridines, les N-vinylamides, les oxazolines, les vinyloxazolidones, les vinylcaprolactones, les vinylcaprolactames, les oxydes d'alkylène, les éthers de vinyle et les phosphoesters,
a2) la polymérisation de l'au moins un monomère contenu dans la première dispersion fournie à l'étape a1) dans la première dispersion, l'au moins un polymère thermoréactif (A) étant obtenu, pour obtenir une deuxième dispersion qui contient l'au moins un minéral argileux (C), le dispersant et l'au moins un polymère thermoréactif (A),
a3) le séchage de la deuxième dispersion obtenue à l'étape a2) pour obtenir le mélange (M).

9. Procédé selon la revendication 8, **caractérisé en ce que** l'au moins un minéral argileux (C) se présente à l'état gonflé pendant la polymérisation à l'étape a2).

10. Procédé selon l'une quelconque des revendications 6 à 9, **caractérisé en ce que** la fourniture du mélange (M) à l'étape a) comprend un séchage par pulvérisation de l'au moins un polymère thermoréactif (A) en présence de l'au moins un minéral argileux (C).

11. Procédé selon l'une quelconque des revendications 6 à 10, **caractérisé en ce que** le mélange (M) fourni à l'étape a) contient l'au moins un polymère thermoréactif (A) sous forme de particules et contient l'au moins un minéral argileux (C) sous forme de particules, les particules de l'au moins un polymère thermoréactif (A) présentant une valeur D50 dans la plage allant de 200 nm à 5 mm et les particules de l'au moins un minéral argileux (C) présentant une valeur D50 dans la plage allant de 50 nm à 3 mm, déterminée par diffusion de lumière et/ou tamisage.

12. Utilisation d'un matériau composite selon l'une quelconque des revendications 1 à 5, pour le refroidissement de bâtiments, de groupes électriques, de batteries ou d'accumulateurs, de façades extérieures de bâtiments, d'espaces intérieurs et pour la régulation thermique dans des sièges, dans des véhicules, dans des chaussures et dans des vêtements.
